# EUROPEAN PATENT APPLICATION

(11) **EP 4 604 596 A1**
(43) Date of publication of application: **20.08.2025**
(21) Application number: 23890537.6
(22) Date of filing: 30.10.2023
(51) Int. Cl.: H04W 24/02

(54) **DATA PROCESSING METHOD AND APPARATUS, COMMUNICATION DEVICE, AND READABLE STORAGE MEDIUM**

(30) Priority: 14.11.2022 CN 202211426429; 08.12.2022 CN 202211574936
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Shieldmark
(86) International application number: PCT/CN2023/127482
(87) International publication number: WO 2024/104101

(57) **Abstract**

This application discloses a data processing method and apparatus, a communication device, and a readable storage medium, and pertains to the field of communication technologies. The data processing method in embodiments of this application includes: A first communication device performs a first operation, where the first operation includes at least one of the following: guaranteeing a first delay budget of a target data packet set; guaranteeing a first access network delay budget of a target data packet set; determining a first delay and/or a first access network delay of a target data packet set; determining a second delay and/or a second access network delay of a target data packet set; determining that a target data packet set is an error or a lost data packet set, or determining that a target data packet set is a successfully transmitted data packet set; determining that a target data packet set is a first-type error or lost data packet set, or determining that a target data packet set is a second-type error or lost data packet set; or determining that a data packet in a target data packet set is an error or a lost data packet, or determining that a data packet in a target data packet set is a successfully transmitted data packet.

## Description

### CROSS-REFERENCE TO RELATED APPLICATIONS

This application claims priorities to Chinese Patent Application No. 202211426429.8 filed in China on November 14, 2022 and to Chinese Patent Application No. 202211574936.6 filed in China on December 8, 2022, which are incorporated herein by reference in their entireties.

### TECHNICAL FIELD

This application pertains to the field of communication technologies, and specifically, relates to a data processing method and apparatus, a communication device, and a readable storage medium.

### BACKGROUND

In an extended-range (extended-range, XR) scenario, one frame or one video slice (slice) may be mapped to a plurality of data packets. These data packets may form a data packet set (for example, a protocol data unit (Protocol Data Unit, PDU) set (Set)). A communication system needs to guarantee an error rate and a delay budget of the data packet set. However, due to congestion in a previous route, there may be a long interval between arrival time of specific data packets in the data packet set and arrival time of other data packets in the data packet set when the data packets arrive at the communication system. These late-arriving data packets may cause the communication system to fail to guarantee an error rate and a delay budget at a data packet set granularity. For example, when the data packets arrive, the delay budget of the data packet set has expired. For example, a data packet set includes 100 data packets, a delay budget of the data packet set is 10 ms, and an interval between arrival time of 15 data packets and arrival time of 85 data packets exceeds 10 ms, or arrival time of the 100 data packets may be close. How to determine an error or success of a data packet set and a delay overhead of the data packet set and how to guarantee quality of service (Quality of Service, QoS) at a data packet set granularity in various cases are problems that need to be resolved in the present invention.

### SUMMARY

Embodiments of this application provide a data processing method, to resolve a problem about how to determine a delay of a data packet set and an error or success of the data packet set and how to guarantee QoS at a data packet set granularity.

According to a first aspect, a data processing method is provided, including:

A first communication device performs a first operation, where
the first operation includes at least one of the following:
guaranteeing a first delay budget of a target data packet set;
guaranteeing a first access network delay budget of a target data packet set;
determining a first delay and/or a first access network delay of a target data packet set;
determining a second delay and/or a second access network delay of a target data packet set;
determining that a target data packet set is an error or a lost data packet set, or determining that a target data packet set is a successfully transmitted data packet set;
determining that a target data packet set is a first-type error or lost data packet set, or determining that a target data packet set is a second-type error or lost data packet set;
determining that a data packet in a target data packet set is an error or a lost data packet, or determining that a data packet in a target data packet set is a successfully transmitted data packet;
discarding or skipping discarding a remaining data packet in a target data packet set in a case that a first delay budget or a first access network delay budget of the target data packet set has expired;
discarding or skipping discarding a second data packet; or
skipping applying quality of service QoS, a delay, a timer, and/or an operation at a data packet set granularity to a second data packet,
where
the first delay is duration from a moment at which a first end receives the 1^{st} data packet in the target data packet set to a moment at which the last target data packet in the target data packet set is successfully transmitted to a second end;
the second delay is duration from a moment at which a first end receives the 1^{st} data packet in the target data packet set to a moment at which the last data packet in the target data packet set is successfully transmitted to a second end;
the first access network delay is duration from a moment at which a third end receives the 1^{st} data packet in the target data packet set to a moment at which the last target data packet in the target data packet set is successfully transmitted to a fourth end;
the second access network delay is duration from a moment at which a third end receives the 1^{st} data packet in the target data packet set to a moment at which the last data packet in the target data packet set is successfully transmitted to a fourth end;
the first delay budget is a delay budget of the target data packet set; and
the first access network delay budget is an access network delay budget of the target data packet set.

According to a second aspect, a data processing method is provided, including:

A first communication system performs a second operation, where
the second operation includes at least one of the following:
guaranteeing a first delay budget of a target data packet set;
guaranteeing a first access network delay budget of a target data packet set;
determining a first delay and/or a first access network delay of a target data packet set;
determining a second delay and/or a second access network delay of a target data packet set;
determining that a target data packet set is an error or a lost data packet set, or determining that a target data packet set is a successfully transmitted data packet set;
determining that a target data packet set is a first-type error or lost data packet set, or determining that a target data packet set is a second-type error or lost data packet set;
determining that a data packet in a target data packet set is an error or a lost data packet, or determining that a data packet in a target data packet set is a successfully transmitted data packet;
discarding or skipping discarding a remaining data packet in a target data packet set in a case that a first delay budget or a first access network delay budget of the target data packet set has expired;
discarding or skipping discarding a second data packet; or
skipping applying quality of service QoS, a delay, a timer, and/or an operation at a data packet set granularity to a second data packet,
where
the first delay is duration from a moment at which a first end receives the 1^{st} data packet in the target data packet set to a moment at which the last target data packet in the target data packet set is successfully transmitted to a second end;
the second delay is duration from a moment at which a first end receives the 1^{st} data packet in the target data packet set to a moment at which the last data packet in the target data packet set is successfully transmitted to a second end;
the first access network delay is duration from a moment at which a third end receives the 1^{st} data packet in the target data packet set to a moment at which the last target data packet in the target data packet set is successfully transmitted to a fourth end;
the second access network delay is duration from a moment at which a third end receives the 1^{st} data packet in the target data packet set to a moment at which the last data packet in the target data packet set is successfully transmitted to a fourth end;
the first delay budget is a delay budget of the target data packet set; and
the first access network delay budget is an access network delay budget of the target data packet set.

According to a third aspect, a data processing apparatus is provided, applied to a first communication device, and including:
a first processing module, configured to perform a first operation, where
the first operation includes at least one of the following:
   guaranteeing a first delay budget of a target data packet set;
   guaranteeing a first access network delay budget of a target data packet set;
   determining a first delay and/or a first access network delay of a target data packet set;
   determining a second delay and/or a second access network delay of a target data packet set;
   determining that a target data packet set is an error or a lost data packet set, or determining that a target data packet set is a successfully transmitted data packet set;
   determining that a target data packet set is a first-type error or lost data packet set, or determining that a target data packet set is a second-type error or lost data packet set;
   determining that a data packet in a target data packet set is an error or a lost data packet, or determining that a data packet in a target data packet set is a successfully transmitted data packet;
   discarding or skipping discarding a remaining data packet in a target data packet set in a case that a first delay budget or a first access network delay budget of the target data packet set has expired;
   discarding or skipping discarding a second data packet; or
   skipping applying quality of service QoS, a delay, a timer, and/or an operation at a data packet set granularity to a second data packet,
   where
   the first delay is duration from a moment at which a first end receives the 1^{st} data packet in the target data packet set to a moment at which the last target data packet in the target data packet set is successfully transmitted to a second end;
   the second delay is duration from a moment at which a first end receives the 1^{st} data packet in the target data packet set to a moment at which the last data packet in the target data packet set is successfully transmitted to a second end;
   the first access network delay is duration from a moment at which a third end receives the 1^{st} data packet in the target data packet set to a moment at which the last target data packet in the target data packet set is successfully transmitted to a fourth end;
   the second access network delay is duration from a moment at which a third end receives the 1^{st} data packet in the target data packet set to a moment at which the last data packet in the target data packet set is successfully transmitted to a fourth end;
   the first delay budget is a delay budget of the target data packet set; and
   the first access network delay budget is an access network delay budget of the target data packet set.

According to a fourth aspect, a data processing apparatus is provided, applied to a first communication system, and including:
a second processing module, configured to perform a second operation, where
the second operation includes at least one of the following:
   guaranteeing a first delay budget of a target data packet set;
   guaranteeing a first access network delay budget of a target data packet set;
   determining a first delay and/or a first access network delay of a target data packet set;
   determining a second delay and/or a second access network delay of a target data packet set;
   determining that a target data packet set is an error or a lost data packet set, or determining that a target data packet set is a successfully transmitted data packet set;
   determining that a target data packet set is a first-type error or lost data packet set, or determining that a target data packet set is a second-type error or lost data packet set;
   determining that a data packet in a target data packet set is an error or a lost data packet, or determining that a data packet in a target data packet set is a successfully transmitted data packet;
   discarding or skipping discarding a remaining data packet in a target data packet set in a case that a first delay budget or a first access network delay budget of the target data packet set has expired;
   discarding or skipping discarding a second data packet; or
   skipping applying quality of service QoS, a delay, a timer, and/or an operation at a data packet set granularity to a second data packet,
   where
   the first delay is duration from a moment at which a first end receives the 1^{st} data packet in the target data packet set to a moment at which the last target data packet in the target data packet set is successfully transmitted to a second end;
   the second delay is duration from a moment at which a first end receives the 1^{st} data packet in the target data packet set to a moment at which the last data packet in the target data packet set is successfully transmitted to a second end;
   the first access network delay is duration from a moment at which a third end receives the 1^{st} data packet in the target data packet set to a moment at which the last target data packet in the target data packet set is successfully transmitted to a fourth end;
   the second access network delay is duration from a moment at which a third end receives the 1^{st} data packet in the target data packet set to a moment at which the last data packet in the target data packet set is successfully transmitted to a fourth end;
   the first delay budget is a delay budget of the target data packet set; and
   the first access network delay budget is an access network delay budget of the target data packet set.

According to a fifth aspect, a communication device is provided, where the communication device includes a processor and a memory, the memory stores a program or instructions capable of running on the processor, and when the program or instructions are executed by the processor, the steps of the method according to the first aspect are implemented.

According to a sixth aspect, a communication device is provided, including a processor and a communication interface. The processor is configured to perform a first operation, where
the first operation includes at least one of the following:
guaranteeing a first delay budget of a target data packet set;
guaranteeing a first access network delay budget of a target data packet set;
determining a first delay and/or a first access network delay of a target data packet set;
determining a second delay and/or a second access network delay of a target data packet set;
determining that a target data packet set is an error or a lost data packet set, or determining that a target data packet set is a successfully transmitted data packet set;
determining that a target data packet set is a first-type error or lost data packet set, or determining that a target data packet set is a second-type error or lost data packet set;
determining that a data packet in a target data packet set is an error or a lost data packet, or determining that a data packet in a target data packet set is a successfully transmitted data packet;
discarding or skipping discarding a remaining data packet in a target data packet set in a case that a first delay budget or a first access network delay budget of the target data packet set has expired;
discarding or skipping discarding a second data packet; or
skipping applying quality of service QoS, a delay, a timer, and/or an operation at a data packet set granularity to a second data packet,
where
the first delay is duration from a moment at which a first end receives the 1^{st} data packet in the target data packet set to a moment at which the last target data packet in the target data packet set is successfully transmitted to a second end;
the second delay is duration from a moment at which a first end receives the 1^{st} data packet in the target data packet set to a moment at which the last data packet in the target data packet set is successfully transmitted to a second end;
the first access network delay is duration from a moment at which a third end receives the 1^{st} data packet in the target data packet set to a moment at which the last target data packet in the target data packet set is successfully transmitted to a fourth end;
the second access network delay is duration from a moment at which a third end receives the 1^{st} data packet in the target data packet set to a moment at which the last data packet in the target data packet set is successfully transmitted to a fourth end;
the first delay budget is a delay budget of the target data packet set; and
the first access network delay budget is an access network delay budget of the target data packet set.

According to a seventh aspect, a communication system is provided. The communication system may be configured to perform the steps of the data processing method according to the second aspect.

According to an eighth aspect, a readable storage medium is provided, where the readable storage medium stores a program or instructions, and when the program or instructions are executed by a processor, the steps of the method according to the first aspect are implemented, or the steps of the method according to the second aspect are implemented.

According to a ninth aspect, a chip is provided, where the chip includes a processor and a communication interface, the communication interface is coupled to the processor, and the processor is configured to run a program or instructions to implement the steps of the method according to the first aspect, or implement the steps of the method according to the second aspect.

According to a tenth aspect, a computer program or program product is provided. The computer program or program product is stored in a storage medium. The computer program or program product is executed by at least one processor to implement the steps of the method according to the first aspect, or implement the steps of or method according to the second aspect.

In the embodiments of this application, a problem about how to determine a delay of a data packet set and an error or success of the data packet set and how to guarantee QoS at a data packet set granularity can be resolved, and processing on a remaining data packet in a data packet set in a case that a delay budget of the data packet set has expired is determined, so that quality of service per data packet set can be better ensured.

### BRIEF DESCRIPTION OF THE DRAWINGS

FIG. 1 is a block diagram of a wireless communication system to which embodiments of this application are applicable;
FIG. 2a to FIG. 2c are diagrams of a transmission delay of a data packet set according to an embodiment of this application;
FIG. 3 is a flowchart of a data processing method according to an embodiment of this application;
FIG. 4 is a flowchart of another data processing method according to an embodiment of this application;
FIG. 5 is a flowchart of still another data processing method according to an embodiment of this application;
FIG. 6 is a diagram of a structure of a data processing apparatus according to an embodiment of this application;
FIG. 7 is a diagram of a structure of another data processing apparatus according to an embodiment of this application; and
FIG. 8 is a diagram of a structure of a communication device according to an embodiment of this application.

### DETAILED DESCRIPTION

The following clearly describes the technical solutions in the embodiments of this application with reference to the accompanying drawings in the embodiments of this application. Clearly, the described embodiments are some but not all of the embodiments of this application. All other embodiments obtained by persons of ordinary skill in the art based on the embodiments of this application fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not limit the number of objects. For example, there may be one or more first objects. In addition, in this specification and the claims, "and/or" indicates at least one of connected objects, and the character "/" generally indicates an "or" relationship between contextually associated objects.

It should be noted that technologies described in the embodiments of this application are not limited to a long term evolution (Long Term Evolution, LTE)/LTE-advanced (LTE-Advanced, LTE-A) system, and may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the aforementioned systems and radio technologies as well as other systems and radio technologies. In the following descriptions, a new radio (New Radio, NR) system is described for an illustration purpose, and NR terms are used in most of the following descriptions. However, these technologies may also be applied to applications other than an NR system application, for example, a 6th generation (6th Generation, 6G) communication system.

For ease of understanding the embodiments of this application, the following technical points are first described below.

Data of a video stream in an XR may be distinguished as an intra picture (intra picture, I) frame, a forward predictive (predictive, P) frame, and a bi-directional interpolated prediction (bi-directional interpolated prediction, B) frame. The I frame is also referred to as an independent decoded frame. A frame between I frames is a P frame or a B frame. An I frame associated with a P frame or a B frame is an I frame prior to and closest to the P frame or the B frame along a timeline. Decoding cannot be performed in the absence of an I frame, but an I frame can be independently decrypted in a case that a non-I frame is absent. Therefore, importance of an I frame is higher than that of a non-I frame. An I frame and a non-I frame may have different QoS requirements. For example, a priority of an I frame is higher than that of a non-I frame. A transmission rate of a non-I frame may be higher than that of an I frame. A frame may also be divided into a plurality of slices. A slice may also be distinguished as an I slice, a P slice, or a B slice, and a difference in importance is similar.

In the related art, an error rate (error rate) of a protocol data unit set (Protocol Data Unit Set, PDU Set) is defined as follows: If none of PDUs in the PDU set is completely transmitted, the PDU set is considered as an error (error). In addition, a PDU set that has not been transmitted after a timeout occurs is also considered as an error.

In addition, in the related art, for a GBR quality of service (Quality of Service, QoS) stream of a delay-critical guaranteed bit rate (Guaranteed Bit Rate, GBR) resource type, a data packet with a delay exceeding a packet delay budget (Packet Delay Budget, PDB) is considered to be lost and is included in a packet error rate (Packet Error Rate, PER).

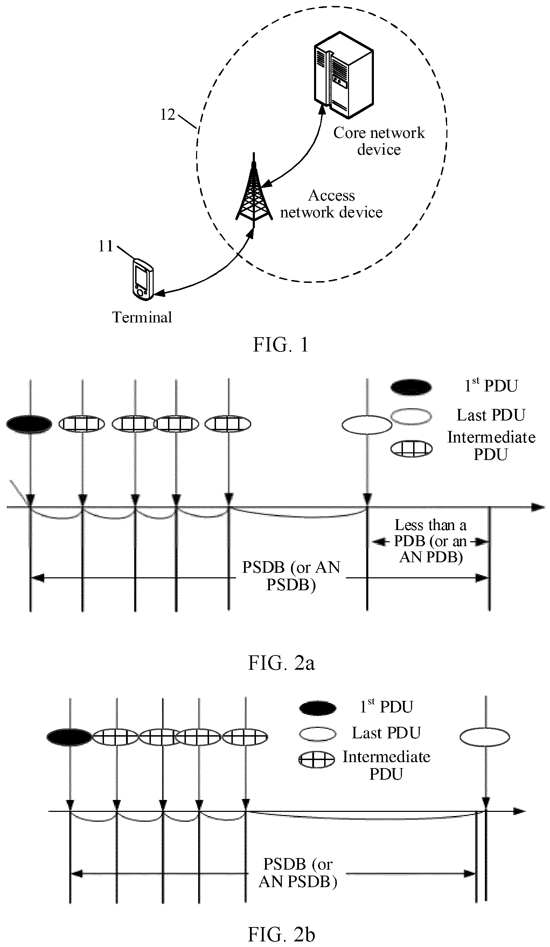

In an XR scenario, data packets (packet) included in an I frame are mapped to a PDU set. For example, an I frame includes 100 data packets, the I frame is mapped to a PDU set, and the PDU set also includes 100 data packets. A PDU set has a corresponding data packet set delay budget (PDU Set delay budget, PSDB). As shown in FIG. 2a, duration from the last PDU in a PDU set to a PSDB needs to be less than a PDB. In the related art, if a delay needed for sending a PDU set is greater than a PSDB, the PDU set is considered as an error.

Issue 1: how to determine a delay (for example, a delay overhead) of a PDU set and a PDU set error (including a PDU set loss (lost))

A delay for sending a PDU set is greater than a PSDB due to the following two causes:
Cause 1: A priority or importance of the PDU set is not high, and time-frequency resources are insufficient. Consequently, the delay for sending the PDU set is greater than the PSDB.
Cause 2: Some data packets in the PDU set arrive late, for example, arrive after the PSDB or an AN PSDB expires. For example, the 100^{th} data packet arrives after the PSDB or the AN PSDB expires. Consequently, the delay for sending the PDU set is greater than the PSDB or the AN PSDB, as shown in FIG. 2b.

In the case in which the delay for sending the PDU set is greater than the PSDB or the AN PSDB due to the cause 2, it is unreasonable to consider the PDU set as a PDU set error. This is because the cause 2 is caused by external transmission of a 5GS but not caused by the 5GS. The 5GS cannot ensure that a data packet arriving after the PSDB or the AN PSDB expires is transmitted before the PSDB or the AN PSDB expires.

Therefore, during calculation of a transmission delay of a PDU set, in an implementation, only a data packet that is in the PDU set before a PSDB or an AN PSDB expires (within duration from a moment at which the 1^{st} data packet is received to a moment at which the last data packet "arriving before the PSDB or the AN PSDB expires" is sent) may be considered, and a data packet arriving after the PSDB or the AN PSDB expires does not need to be considered.

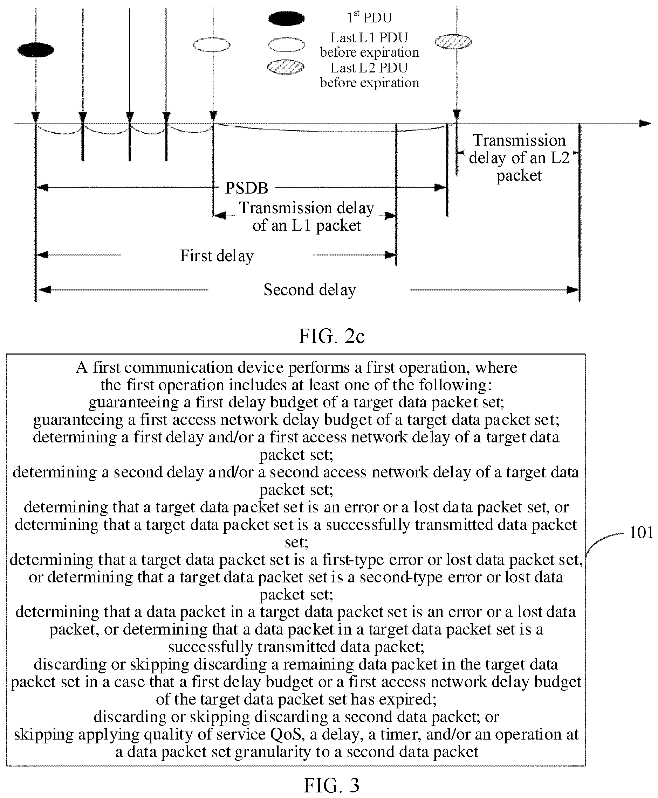

As shown in FIG. 2c, a first delay is less than a PSDB or an AN PSDB. Therefore, it can be considered that a delay of a PDU set is less than the PSDB or the AN PSDB. The PDU set should be considered as successfully transmitted, but not considered as a PDU set error or a PDU set loss (lost). The first delay may be duration from a moment at which the 1^{st} data packet is received to a moment at which the last data packet "arriving before the PSDB or the AN PSDB expires" is sent. A second delay is duration from the moment at which the 1^{st} data packet is received to a moment at which the last data packet (including a data packet received after the PSDB or the AN PSDB expires) in the PDU set is sent.

Issue 2: Whether a data packet that has not been scheduled after a PSDB or an AN PSDB expires is to be further sent or discarded is unclear.

In the related art, whether a data packet that has not been scheduled after a PSDB or an AN PSDB expires is to be further sent or discarded is unclear.

In an implementation, if a PDU set has a corresponding first indication, for example, the first indication indicates that all PDUs in the PDU set need to be sent, a data packet that has not been scheduled after a PSDB or an AN PSDB expires still needs to be sent. The packet that has not been scheduled after the PSDB or the AN PSDB expires includes a data packet that arrives before the PSDB or the AN PSDB expires and a data packet that arrives after the PSDB or the AN PSDB expires.

If a PDU set does not have a corresponding first indication, a data packet that has not been scheduled after a PSDB or an AN PSDB expires may be discarded or further transmitted. A data packet that has not been sent after a PSDB expires due to the cause 1 may be further transmitted or discarded, because such a data packet has stayed in a cache for a sufficiently long time but has not obtained a scheduling opportunity. For a data packet that has not been sent after a PSDB expires due to the cause 2, because the PSDB has expired when the data packet arrives, the data packet may be further transmitted after the PSDB or an AN PSDB expires.

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effect is achieved, the base station is not limited to a specific technical term. It should be noted that a base station in an NR system is used only as an example for description in the embodiments of this application, but a specific type of the base station is not limited.

Optionally, obtaining may be understood as obtaining from a configuration, receiving, receiving after a request, obtaining through self-learning, obtaining through deduction based on information not received, or obtaining through processing based on received information. This may be specifically determined according to an actual requirement, and is not limited in the embodiments of this application. For example, when specific capability indication information sent by a device is not received, it can be inferred that the device does not support the capability.

Optionally, sending may include broadcasting, broadcasting in a system message, or returning in response to a request.

Optionally, data arriving includes receiving the data.

Optionally, a concept of data and a concept of data packet may be the same, and the two concepts may be used interchangeably.

In an optional embodiment of this application, a communication device may include at least one of the following: a communication network element and a terminal.

In an embodiment of this application, a communication network element may include at least one of the following: a core-network network element and a radio-access-network network element.

In the embodiments of this application, the core-network network element (CN network element) may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like.

In the embodiments of this application, the RAN network element may include, but is not limited to, at least one of the following: a radio access network device, a radio access network node, a radio access network function, a radio access network unit, a 3GPP radio access network, a non-3GPP radio access network, a central unit (Centralized Unit, CU), a distributed unit (Distributed Unit, DU), a base station, an evolved NodeB (evolved NodeB, eNB), a 5G NodeB (gNB), a radio network controller (Radio Network Controller, RNC), a NodeB (NodeB), a non-3GPP interworking function (Non-3GPP Inter Working Function, N3IWF), an access controller (Access Controller, AC) node, an access point (Access Point, AP) device, a wireless local area network (Wireless Local Area Networks, WLAN) node, or an N3IWF.

The base station may be a base transceiver station (Base Transceiver Station, BTS) in global system for mobile communications (Global System for Mobile Communication, GSM) or CDMA, or may be a NodeB (NodeB) in wideband code division multiple access (Wideband Code Division Multiple Access, WCDMA), or may be an evolved NodeB (eNB or e-NodeB, evolutional NodeB) or a 5G NodeB (gNB) in LTE. This is not limited in the embodiments of this application.

In an optional embodiment of this application, user equipment (User Equipment, UE) may include one of the following: a terminal device, a terminal device and card, and a card.

In an optional embodiment of this application, the card may include one of the following: a SIM card, a USIM card, and an eSIM.

In an optional embodiment of this application, the terminal may include a relay supporting a terminal function and/or a terminal supporting a relay function. The terminal may also be referred to as a terminal device or user equipment (User Equipment, UE). The terminal may be a terminal-side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of this application.

In an embodiment of this application, a first delay includes a first delay overhead.

In an embodiment of this application, a first access network delay includes a first access network delay overhead.

In an embodiment of this application, arrival time and receiving time are equivalent, and may be used interchangeably. For example, receiving time of a data packet may be time at which the data packet is received. The receiving time of the data packet is equivalent to arrival time of the data packet.

In an embodiment of this application, the 1^{st} data packet is the 1^{st} arriving data packet or the 1^{st} received data packet in a target data packet set.

In an embodiment of this application, skipping discarding includes one of the following: transmitting, or continuing to transmit; and skipping discarding a data packet includes one of the following: continuing to transmit the data packet, or retaining the data packet in a cache to wait to be transmitted.

In an embodiment of this application, an N3 interface is a user plane interface between a RAN and a CN.

In an embodiment of this application, an N9 interface is an interface between UPFs.

In an embodiment of this application, a Uu interface is an interface between a RAN and a terminal.

In an embodiment of this application, a data packet includes a PDU.

In an embodiment of this application, a data packet set includes a PDU set.

In an embodiment of this application, a data packet set error (for example, a PDU set error) includes a data packet set loss (for example, PDU set lost).

In an optional embodiment of this application, QoS, a delay, a timer, and/or an operation at a data packet set granularity includes at least one of the following: a delay budget of a first data packet set, a first timer of a first data packet set, an access network delay budget of a first data packet set, a PSDB, an AN PSDB, a first timer, performing scheduling based on remaining duration of a delay budget of a first data packet set, or performing scheduling based on remaining duration of an access network delay budget of a first data packet set.

In an optional embodiment of this application, a delay budget (which may also be referred to as a PSDB) of the target data packet set is an upper limit of duration from a moment at which a first end receives the 1^{st} data packet in the target data packet set to a moment at which the last data packet in the target data packet set is successfully transmitted to a second end.

In an optional embodiment of this application, an access network delay budget (which may also be referred to as an AN PSDB) of the target data packet set is one of the following:
an upper limit of duration from a moment at which a third end receives the 1^{st} data packet in the target data packet set to a moment at which the last data packet in the target data packet set is successfully transmitted to a fourth end;
a difference obtained by subtracting a CN PDB from a PSDB; or
a difference obtained by subtracting a CN PSDB from a PSDB.

In an optional embodiment of this application, the PDB (which may also be referred to as a delay budget of a data packet or a delay budget at a data packet level) is one of the following:
an upper limit of duration from a moment at which a first end receives the data packet to a moment at which the data packet is successfully transmitted to a second end; or
an upper limit of duration (for example, a delay) needed for transmitting the data packet between a first end and a second end.

In an optional embodiment of this application, the AN PDB (which may also be referred to as an access network delay budget of a data packet or an access network delay budget at a data packet level) is one of the following:
a difference obtained by subtracting an AN PDB from a PDB;
an upper limit of duration from a moment at which a third end receives the target data packet to a moment at which the data packet is successfully transmitted to a fourth end; or
an upper limit of duration (for example, a delay) needed for transmitting the data packet between a third end and a fourth end.

In an optional embodiment of this application, the CN PDB (which may also be referred to as a core network delay budget of a data packet or a core network delay budget at a data packet level) is one of the following:
an upper limit of duration from a moment at which a fifth end receives the target data packet to a moment at which the data packet is successfully transmitted to a sixth end; or
an upper limit of duration (for example, a delay (delay)) needed for transmitting the data packet between a fifth end and a sixth end.

In an optional embodiment of this application, the fifth end includes one of the following: a RAN or an N3 interface; and the sixth end includes one of the following: an anchor gateway or an N6 interface; or the fifth end includes one of the following: an anchor gateway or an N6 interface; and the sixth end includes one of the following: a RAN or an N3 interface.

In an optional embodiment of this application, a core network delay of a data packet (which may also be referred to as an N3 interface delay and/or an N9 interface delay) is one of the following:
time needed for transmitting the data packet between a RAN network element and an anchor gateway; or
time needed for transmitting the data packet between a fifth end and a sixth end.

In an implementation, the core network delay of the data packet may be referred to as a core network delay overhead of the data packet.

In an implementation, a data packet set error rate is, for example, a PSER.

In an implementation, a data packet set error rate is, for example, a PDU.

In an optional embodiment of this application, a total data amount of the target data packet set includes a total quantity or a total size of data packets in the target data packet set.

In an optional embodiment of this application, a first time interval meets one of the following:
a difference obtained by subtracting the first time interval from a first delay budget is greater than or equal to a CN PDB;
a difference obtained by subtracting the first time interval from a first delay budget is greater than or equal to the core network delay of the data packet;
a difference obtained by subtracting the first time interval from a first delay budget is greater than or equal to a PDB;
a difference obtained by subtracting the first time interval from a first delay budget is greater than or equal to zero;
a difference obtained by subtracting the first time interval from a first access network delay budget is greater than or equal to zero;
a difference obtained by subtracting the first time interval from a first access network delay budget is greater than or equal to an AN PDB; or
the first time interval is less than or equal to one of the following: the first delay budget, the first access network delay budget, first duration, a difference obtained by subtracting a CN PDB from the first delay budget, a difference obtained by subtracting a PDB from the first delay budget, a difference obtained by subtracting an AN PDB from the first access network delay budget, or a difference obtained by subtracting a core network delay of the data packet from the first delay budget.

In an optional embodiment of this application, the first duration meets one of the following:
a difference obtained by subtracting the first duration from the first delay budget is greater than or equal to a CN PDB;
a difference obtained by subtracting the first duration from the first delay budget is greater than or equal to the core network delay of the data packet;
a difference obtained by subtracting the first duration from the first delay budget is greater than or equal to a PDB;
a difference obtained by subtracting the first duration from the first delay budget is greater than or equal to zero;
a difference obtained by subtracting the first duration from the first access network delay budget is greater than or equal to zero;
a difference obtained by subtracting the first duration from the first access network delay budget is greater than or equal to an AN PDB;
the first duration is less than or equal to the first delay budget;
the first duration is less than or equal to a difference obtained by subtracting a CN PDB from the first delay budget;
the first duration is less than or equal to a difference obtained by subtracting a core network delay of the data packet from the first delay budget;
the first duration is less than or equal to a difference obtained by subtracting a PDB from the first delay budget;
the first duration is less than or equal to the first access network delay budget; or
the first duration is less than or equal to a difference obtained by subtracting an AN PDB from the first access network delay budget.

In an implementation, the first duration is a time interval threshold of an application data packet set delay budget.

In an optional embodiment of this application, a first delay budget (for example, a PSDB) is used for indicating a delay budget for transmitting a data packet set between a terminal and an anchor gateway (to be specific, a gateway terminating an N6 interface, for example, a UPF serving as a PDU session anchor (PDU Session Anchor, PSA)) (to be specific, duration from a moment at which the 1^{st} data packet in the data packet set is transmitted to a moment at which the last data packet is transmitted cannot exceed the first delay budget). Optionally, the first delay budget further includes at least one of the following: residence time of the data packet set on the terminal, or residence time of the data packet set on the anchor gateway. The first delay budget may also be described as a delay budget of a data packet set.

In an optional embodiment of this application, a first delay budget or a delay budget of a data packet includes a packet set delay budget (for example, a PSDB). In an optional embodiment of this application, the PSDB is a delay budget of a group of data packets or a data packet set.

In an implementation, the PSDB is used for indicating an upper bound of time within a PDU set may be delayed between UE and an anchor gateway (to be specific, a gateway terminating an N6 interface) (to be specific, duration from a moment at which the 1^{st} data packet in the PDU set is transmitted to a moment at which the last data packet is transmitted cannot exceed the PSDB). For a specific QoS identifier (for example, a 5QI), a value of the PSDB in uplink and a value of the PSDB in downlink may be different or the same.

In an optional embodiment of this application, the PSDB is a delay budget of a group of data packets or a data packet set.

In an optional embodiment of this application, a first delay budget or a first access network delay budget (for example, an AN PSDB) may be one of the following: a delay budget for transmitting a data packet set between a terminal and a RAN network element, or a value obtained by subtracting second core network delay information from a delay budget for transmitting a data packet set between a terminal and an anchor gateway. Optionally, the first delay budget or the first access network delay budget further includes at least one of the following: residence time of the data packet set on the terminal, or residence time of a data packet set on the RAN network element.

In an optional embodiment of this application, a second delay budget (for example, a PDB) is used for indicating a delay budget for transmitting a data packet between a terminal and an anchor gateway (to be specific, a gateway terminating an N6 interface). Optionally, the second delay budget further includes at least one of the following: residence time of the data packet on the terminal, or residence time of the data packet on the anchor gateway. The second delay budget may also be described as a data packet delay budget.

The data packet delay budget includes a packet delay budget (PDB). In an optional embodiment of this application, the PDB is a delay budget of a single data packet.

In an implementation, the PDB is used for indicating an upper bound of time within which a PDU may be delayed between UE and an anchor gateway (to be specific, a gateway terminating an N6 interface). The PDB may be applied to a downlink packet received by the anchor gateway (for example, a UPF) through the N6 interface and an uplink packet sent by the terminal. For a specific QoS identifier (for example, a 5QI), a value of the PDB in uplink and a value of the PDB in downlink may be the same.

In an optional embodiment of this application, a second delay budget or a second access network delay budget (for example, an AN PDB) may be one of the following: a delay budget for transmitting a data packet between a terminal and a RAN network element; or a value obtained by subtracting second core network delay information from a delay budget for transmitting a data packet between a terminal and an anchor gateway. Optionally, the second delay budget or the second access network delay budget further includes at least one of the following: residence time of the data packet on the terminal, or residence time of the data packet on the RAN network element.

In an optional embodiment of this application, a second core network delay budget (for example, a CN PDB) is used for indicating a delay budget for transmitting a data packet between a radio access network RAN and an anchor gateway. The second core network delay budget may also be described as a core network delay budget of a data packet. Optionally, the second core network delay information further includes at least one of the following: residence time of the data packet on the anchor gateway, or residence time of the data packet on a RAN network element.

In an optional embodiment of this application, a data packet set may be referred to as a data set for short. The data packet set includes one or more data packets. Optionally, the data packet set has a boundary.

In an optional embodiment of this application, the data packet set is a concept in a cellular mobile communication network. The data packet set may be a segment including one or more data packets or a set including one or more data packets in a channel (for example, a QoS flow, a QoS subflow, or a radio bearer).

In an optional embodiment of this application, the data packet may be a PDU packet data unit.

In an optional embodiment of this application, the data packet set may be one of the following: a packet data unit set PDU set, an instance of a PDU set, a PDU set class, an instance of a PDU set class, or a data segment or a data packet set in a channel (for example, a QoS flow, a QoS subflow, or a radio bearer).
(1) In an implementation, a type of PDU set may include a plurality of PDU set instances. A type of PDU set may be identified by a PDU set identifier (for example, a QoS identifier at a PDU set level). A plurality of different PDU set instances of a same PDU set may be distinguished by data packet set sequence numbers (for example, PDU set sequence numbers).
(2) In another implementation, one PDU set type may include a plurality of PDU sets. The PDU sets are instances of the PDU set type. The PDU set type may be identified by a PDU set identifier (for example, a QoS identifier at a PDU set level). A plurality of different PDU sets of a same PDU set type may be distinguished by data packet set sequence numbers (for example, PDU set sequence numbers).

In an optional embodiment of this application, the data packet set type may be one of the following: a packet data unit set (PDU set) or a channel (for example, a QoS flow, a QoS subflow, or a radio bearer). One data packet set type may correspond to a plurality of data packet sets. The data packet sets are instances of the data packet set type. The data packet set type may be identified by a data packet set type identifier. The data packet set type identifier is, for example, a QoS identifier at a data packet set level. In this case, the plurality of data packet sets may be distinguished by sequence numbers of the data packet sets.

In an implementation, the one or more data packet sets are of a same type or different types. Different types of data packet sets may be distinguished by identifiers of the data packet sets. Different data packet sets of a same type may be distinguished by sequence numbers of the data packet sets.

In an optional embodiment of this application, the PDU set is as follows: The PDU set includes one or more PDUs, and these PDUs carry a payload (for example, a frame or a video slice (video slice)) of an information unit generated at an application program level. In some implementations, an application layer needs all the PDUs in the PDU set for using the corresponding information unit. In other implementations, when some PDUs are lost, the application layer may still restore the entire or a part of the information unit.

In an embodiment of this application, QoS information includes at least one of the following: a QoS class indicator (for example, a QC1 or a 5QI), a QoS rule, QoS flow description information, QoS context information, and QoS parameter information. The QoS flow description information may include QoS parameter information, and the QoS context information may include QoS parameter information.

In an embodiment of this application, data packet filtering information is included in the QoS rule.

In an embodiment of this application, the QoS parameter information may include at least one of the following: QoS class indicator information, priority information, a packet delay budget, a packet error rate, a maximum data burst size, whether a guaranteed bit rate (Guaranteed Bit Rate, GBR) is used, whether there is a default average window requirement, a default average window, or GBR-related QoS parameter information.

In an embodiment of this application, a channel being of a GBR type indicates that QoS information of the channel includes a GBR-related QoS parameter.

In an embodiment of this application, the GBR-related QoS parameter information may include at least one of the following: an uplink and/or downlink guaranteed flow bit rate CFBR, an uplink and/or downlink maximum flow bit rate MFBR, an uplink and/or downlink GBR, or an uplink and/or downlink maximum bit rate MBR.

In an embodiment of this application, a QoS information requirement may be one of the following: QoS information or a QoS requirement; and QoS information may be one of the following: a QoS information requirement or a QoS requirement.

In an embodiment of this application, the QoS class indicator may be referred to as a 5QI, a QCI (QoS type indicator), or another name. This is not limited in this application. The 5QI may be used as a QFI (QoS flow identifier).

In an embodiment of this application, packet filter information may be used for mapping data to a network channel. The packet filter information may also be referred to as a TFT, an SDF, or another name. This is not specifically limited in this application.

In the embodiments of this application, data packet filtering information, packet filter information, and a packet filter may represent a same meaning, and may be used interchangeably. QoS parameter information and a QoS parameter may represent a same meaning, and may be used interchangeably. QoS class indicator information and the QoS class indicator may represent a same meaning, and may be used interchangeably. QoS flow description information and a QoS flow description may represent a same meaning, and may be used interchangeably. Priority information, QoS priority information, and a priority may represent a same meaning, and may be used interchangeably.

In an embodiment of this application, a channel between a terminal and a second network may be referred to as a second network channel for short.

In an embodiment of this application, an emergency service may also be referred to as an emergency voice service.

In an embodiment of this application, a voice service may include an IMS voice service. The IMS voice service may include at least one of the following: a 3GPP IMS voice service and a non-3GPP IMS voice service.

In an optional embodiment of the present invention, the channel includes at least one of the following: a session (session) (for example, a PDU session, or a session between a RAN and a CN), a QoS flow, a QoS subflow, an evolved packet system (Evolved Packet System, EPS) bearer, a PDP context, a DRB, a signaling radio bearer (Signalling Radio Bearer, SRB), an IPsec association, a GPRS tunneling protocol (GPRS Tunnelling Protocol, GTP) tunnel (tunnel). The channel may be instantiated as any one of the foregoing types of channels.

In an embodiment of this application, an IPsec channel may be an IPsec security association SA. A first IPsec channel may be referred to as one of the following: a signaling IPsec SA, an IPsec primary SA, or an IPsec SA for transmitting control signaling; or may be referred to as another name. This is not specifically limited in this application. A data IPsec channel may be referred to as one of the following: a data IPsec SA, an IPsec sub-SA, an IPsec SA for transmitting user plane data, or an IPsec SA for transmitting QoS flow data; or may be referred to as another name. This is not specifically limited in this application.

In an embodiment of this application, a first network may be a public net, and a second network may be a non-public net; or the first network may be a non-public net, and the second network may be a public net; or the first network may be a first non-public net, and the second network may be a second non-public net; or the first network may be a first public net, and the second network may be a second public net.

In an embodiment of this application, a non-public net is short for a non-public network. The non-public network may be referred to as one of the following: a non-public communication network. The non-public net may include at least one of the following deployment modes: a physical non-public net, a virtual non-public net, or a non-public net implemented on a public net. In an implementation, the non-public net is a closed access group (Closed Access Group, CAG). A CAG may include a group of terminals.

In an embodiment of this application, a non-public net service is short for a non-public network service. The non-public network service may also be referred to as one of the following: a network service of a non-public network, a non-public communication service, a non-public network communication service, a network service of a non-public net, or another name. It should be noted that a manner of naming is not specifically limited in the embodiments of this application. In an implementation, when the non-public net is a closed access group, the non-public net service is a network service of the closed access group.

In an embodiment of this application, the non-public network may include or be referred to as a private network. The private network may be referred to as one of the following: a private communication network, a private net, a local area network (Local Area Network, LAN), a virtual private network (Virtual Private Network, VPN), an isolated communication network, a dedicated communication network, or another name. It should be noted that a manner of naming is not specifically limited in the embodiments of this application.

In an embodiment of this application, the non-public network service may include or be referred to as a private network service. The private network service may be referred to as one of the following: a network service of a private network, a private communication service, a private network service, a private net service, a local area network (LAN) service, a virtual private network (VPN) service, an isolated communication network service, a dedicated communication network service, a dedicated network service, or another name. It should be noted that a manner of naming is not specifically limited in the embodiments of this application.

In an embodiment of this application, a public net is short for a public network. The public network may be referred to as one of the following: a public communication network or another name. It should be noted that a manner of naming is not specifically limited in the embodiments of this application.

In an embodiment of this application, a public net service is short for a public network service. The public network service may also be referred to as one of the following: a network service of a public network, a public communication service, a public network communication service, a network service of a public net, or another name. It should be noted that a manner of naming is not specifically limited in the embodiments of this application.

In an embodiment of this application, an NG interface may also be referred to as an S1 interface or an N2 interface, and a name is not limited.

In an embodiment of this application, a communication network element may include at least one of the following: a core-network network element and a radio-access-network network element.

In the embodiments of this application, a network element of a first network (or referred to as a first-network network element) includes at least one of the following: a core-network network element of the first network and a radio-access-network network element of the first network; and a network element of a second network (or referred to as a second-network network element) includes at least one of the following: a core-network network element of the second network and a radio-access-network network element of the second network.

In an embodiment of this application, a first network channel is a channel established between a terminal and a first network.

In an embodiment of this application, a second network channel is a channel established between a terminal and a second network.

In an embodiment of this application, a mapping relationship between a differentiated services code point (Differentiated Services Code Point, DSCP) and QoS information is a mapping relationship between a DSCP in a second network and QoS information.

In an embodiment of this application, QoS information to which a DSCP is mapped is QoS information obtained based on the DSCP and a mapping relationship between the DSCP and the QoS information.

The following describes in detail a data processing method provided in the embodiments of this application with reference to the accompanying drawings and by using some embodiments and application scenarios thereof.

As shown in FIG. 3, an embodiment of the present invention provides a data processing method, applied to a first communication device. The first communication device includes, but is not limited to, a RAN network element or a CN network element (for example, including, but not limited to, an SMF, a PCF, and a user plane function (User Plane Function, UPF)). The method includes the following steps.

Step 101: The first communication device performs a first operation.

The first operation includes at least one of the following:
guaranteeing a first delay budget (for example, a PSDB) of a target data packet set;
guaranteeing a first access network delay budget (for example, an AN PSDB) of a target data packet set;
determining a first delay and/or a first access network delay of a target data packet set;
determining a second delay and/or a second access network delay of a target data packet set;
determining that a target data packet set is an error or a lost data packet set, or determining that a target data packet set is a successfully transmitted data packet set;
determining that a target data packet set is a first-type error or lost data packet set, or determining that a target data packet set is a second-type error or lost data packet set;
determining that a data packet in a target data packet set is an error or a lost data packet, or determining that a data packet in a target data packet set is a successfully transmitted data packet;
discarding or skipping discarding a remaining data packet in a target data packet set in a case that a first delay budget or a first access network delay budget of the target data packet set has expired;
discarding or skipping discarding a second data packet; or
skipping applying quality of service QoS, a delay, a timer, and/or an operation at a data packet set granularity to a second data packet, where
the first delay is duration from a moment at which a first end receives the 1^{st} data packet in the target data packet set to a moment at which the last target data packet in the target data packet set is successfully transmitted to a second end;
the second delay is duration from a moment at which a first end receives the 1^{st} data packet in the target data packet set to a moment at which the last data packet in the target data packet set is successfully transmitted to a second end;
the first access network delay is duration from a moment at which a third end receives the 1^{st} data packet in the target data packet set to a moment at which the last target data packet in the target data packet set is successfully transmitted to a fourth end;
the second access network delay is duration from a moment at which a third end receives the 1^{st} data packet in the target data packet set to a moment at which the last data packet in the target data packet set is successfully transmitted to a fourth end;
the first delay budget is a delay budget of the target data packet set; and
the first access network delay budget is an access network delay budget of the target data packet set.

In an implementation, the delay budget of the target data packet set is a delay budget (for example, a PSDB) at a data packet set level.

In an implementation, the access network delay budget of the target data packet set is an access network delay budget (for example, an AN PSDB) at a data packet set level.

In an implementation, the last target data packet may be the last data packet in the target data packet set or may not be the last data packet in the target data packet set. For example, a target data packet set is a set including 10 data packets. The first access network delay budget is 5 ms. For example, first time intervals of the 10 data packets are less than 5 ms. In this case, the last target data packet may be the last data packet in the target data packet set. For example, a first time interval of one of the 10 data packets is greater than 5 ms. In this case, the last target data packet may be the last one of the first nine data packets that have arrived. Details are shown in FIG. 2c.

In an implementation, the guaranteeing a first delay budget (a PSDB) of a target data packet set includes: enabling the first delay or the second delay of the target data packet set to be less than or equal to the first delay budget.

In an implementation, the guaranteeing a first access network delay budget (an AN PSDB) of a target data packet set includes: enabling the first access network delay or the second access network delay of the target data packet set to be less than or equal to the first access network delay budget.

In some embodiments, the delay budget of the target data packet set is an upper limit of the duration from the moment at which the first end receives the 1^{st} data packet in the target data packet set to the moment at which the last data packet (for example, the last target data packet) in the target data packet set is successfully transmitted to the second end; and
the access network delay budget of the target data packet set is an upper limit of the duration from the moment at which the third end receives the 1^{st} data packet in the target data packet set to the moment at which the last data packet (for example, the last target data packet) in the target data packet set is successfully transmitted to the fourth end.

In an implementation, the 1^{st} data packet is the 1^{st} arriving data packet or the 1^{st} received data packet in the target data packet set.

In some embodiments, the first end includes one of the following: a terminal or a Uu interface; and the second end includes one of the following: an anchor gateway (for example, a UPF serving as a PSA: PSA UPF) or an N6 interface;
or
the first end includes one of the following: an anchor gateway or an N6 interface; and the second end includes one of the following: a terminal or a Uu interface;
   or
the first end includes one of the following: a terminal or a Uu interface; and the second end includes one of the following: a RAN or an N3 interface;
   or
the first end includes one of the following: a RAN or an N3 interface; and the second end includes one of the following: a terminal or a Uu interface.

In some embodiments, the third end includes one of the following: a terminal or a Uu interface; and the fourth end includes one of the following: a RAN or an N3 interface;
or
the third end includes one of the following: a RAN or an N3 interface; and the fourth end includes one of the following: a terminal or a Uu interface.

In an implementation, in a downlink direction, the first delay budget is an upper limit of duration from a moment at which a RAN network element or an N3 interface receives the 1^{st} data packet in the target data packet set to a moment at which the last target data packet in the target data packet set is successfully transmitted to UE.

In an implementation, in an uplink direction, the first delay budget is an upper limit of duration from a moment at which UE (for example, a NAS layer or an AS layer of the UE) receives the 1^{st} data packet in the target data packet set to a moment at which the last target data packet in the target data packet set is successfully transmitted to a RAN (for example, including a residence delay in the RAN) or an N3 interface.

In another implementation, in a downlink direction, the first delay budget is an upper limit of duration from a moment at which an anchor gateway (for example, a PSA) or an N6 interface receives the 1^{st} data packet in the target data packet set to a moment at which the last target data packet in the target data packet set is successfully transmitted to UE.

In an implementation, in an uplink direction, the first delay budget is an upper limit of duration from a moment at which UE (for example, a NAS layer or an AS layer of the UE) receives the 1^{st} data packet in the target data packet set to a moment at which the last target data packet in the target data packet set is successfully transmitted to an anchor gateway or an N6 interface.

In an implementation, an N3 interface is a user plane interface between a CN and a RAN.

In an implementation, a Uu interface is an interface between a terminal and a RAN.

In some embodiments, the target data packet is a data packet that is in the target data packet set and that meets a first condition, where
the first condition includes at least one of the following:
the data packet is received before the first delay budget expires or before the first access network delay budget expires; or
a first time interval meets one of the following: a difference obtained by subtracting the first time interval from the first delay budget is greater than or equal to a CN PDB; a difference obtained by subtracting the first time interval from the first delay budget is greater than or equal to a core network delay of the data packet; a difference obtained by subtracting the first time interval from the first delay budget is greater than or equal to a PDB; a difference obtained by subtracting the first time interval from the first delay budget is greater than or equal to zero; a difference obtained by subtracting the first time interval from the first access network delay budget is greater than or equal to zero; a difference obtained by subtracting the first time interval from the first access network delay budget is greater than or equal to an AN PDB; or the first time interval is less than or equal to one of the following: the first delay budget, the first access network delay budget, first duration, a difference obtained by subtracting a CN PDB from the first delay budget, a difference obtained by subtracting a PDB from the first delay budget, a difference obtained by subtracting an AN PDB from the first access network delay budget, or a difference obtained by subtracting a core network delay of the data packet from the first delay budget,
where
the first time interval is a time interval between receiving time of the target data packet and receiving time of the 1^{st} arriving data packet in the target data packet set.

Receiving time of a data packet may be time at which the data packet is received. The receiving time of the data packet is equivalent to arrival time of the data packet.

In an implementation, the first delay budget or the first access network delay budget starts from receiving time of the 1^{st} received data packet of the target data packet.

The first duration may be less than or equal to one of the following: the first delay budget or the first access network delay budget.

It is easy to understand that a difference obtained by subtracting the first duration from the first delay budget or the first access network delay budget should be sufficient for a first communication system or the first communication device to successfully transmit a data packet (for example, one data packet) to the second end. In other words, the first duration is less than or equal to (a difference obtained by subtracting "time (for example, minimum time needed) needed for the first communication system or the first communication device to successfully transmit a data packet (for example, one data packet) to the second end" from "the first delay budget or the first access network delay budget").

In an implementation, the difference obtained by subtracting the first duration from the first delay budget is greater than or equal to one of the following: a data packet-level delay budget (for example, a PDB), a data packet-level core network delay budget (for example, a CN PDB), or zero.

In an implementation, the difference obtained by subtracting the first duration from the first access network delay budget is greater than or equal to one of the following: a data packet-level access network delay budget (for example, an AN PDB) or zero.

In some embodiments, the second data packet is a data packet that is in the target data packet set and that meets a second condition, where
the second condition includes at least one of the following:
a first time interval is greater than or equal to one of the following: the first delay budget, the first access network delay budget, or first duration; or
the data packet is received after the first delay budget expires or after the first access network delay budget expires,
where
the first time interval is a time interval between arrival time of the target data packet and arrival time of the 1^{st} arriving data packet in the target data packet set.

It is easy to understand that, if the second data packet (a data packet whose arrival time is later than a timeout period of the first delay budget) exists in the target data packet set, a delay overhead of the target data packet set is inevitably greater than the first delay budget. However, this case is not caused by a failure of the first communication system (for example, a 5GS) or the first communication device to guarantee the first delay budget or the first access network delay budget, but is caused by late arrival of a data packet. Therefore, this case should not be considered during determining of a data packet set loss or error (for example, a PDU set error).

The 1^{st} data packet is the 1^{st} arriving data packet in the target data packet set.

It is easy to understand that only a target data packet whose first time interval is less than the first delay budget may be possibly scheduled before the first delay budget expires.

Optionally, the first duration meets one of the following:
a difference obtained by subtracting the first duration from the first delay budget is greater than or equal to a CN PDB;
a difference obtained by subtracting the first duration from the first delay budget is greater than or equal to a core network delay of the data packet;
a difference obtained by subtracting the first duration from the first delay budget is greater than or equal to a PDB;
a difference obtained by subtracting the first duration from the first delay budget is greater than or equal to zero;
a difference obtained by subtracting the first duration from the first access network delay budget is greater than or equal to zero;
a difference obtained by subtracting the first duration from the first access network delay budget is greater than or equal to an AN PDB;
the first duration is less than or equal to the first delay budget;
the first duration is less than or equal to a difference obtained by subtracting a CN PDB from the first delay budget;
the first duration is less than or equal to a difference obtained by subtracting a core network delay of the data packet from the first delay budget;
the first duration is less than or equal to a difference obtained by subtracting a PDB from the first delay budget;
the first duration is less than or equal to the first access network delay budget; or
the first duration is less than or equal to a difference obtained by subtracting an AN PDB from the first access network delay budget.

In an implementation, in a case that the first time interval can be equal to the first duration, the difference obtained by subtracting the first duration from the first delay budget, or the difference obtained by subtracting the first duration from the first access network delay budget cannot be equal to zero, but needs to be greater than zero; or in a case that the first time interval can be equal to the first duration, the difference obtained by subtracting the first duration from the first delay budget, or the difference obtained by subtracting the first duration from the first access network delay budget can be equal to zero. It is easy to understand that, in this way, the difference obtained by subtracting the first time interval from the first delay budget can always be greater than zero, or the difference obtained by subtracting the first time interval from the first access network delay budget can always be greater than zero. The first time interval is a time interval between receiving time of the target data packet and receiving time of the 1^{st} arriving data packet in the target data packet set.

For example, the AN PSDB is a data packet set delay budget between UE and a RAN, for example, 6 ms;
the PSDB is a data packet set delay budget between the UE and a PSA UPF, for example, 10 ms; transmission of all data packets in the target data packet set needs to be completed within 10 ms;
the PDB is a data packet delay budget between the UE and the PSA UPF, for example, 5 ms;
the AN PDB is a data packet delay budget between the UE and the RAN, for example, 1 ms;
the CN PDB is a data packet delay budget between the RAN and the PSA UPF, for example, 4 ms, in other words, a core network delay overhead of a data packet is a data packet delay budget between the RAN and the PSA UPF, for example, 4 ms;
the 1^{st} data packet in the target data packet set arrives at the UPF at 0 ms and arrives at the RAN at 4 ms, and a scheduling opportunity or scheduling time of 6 ms still remains;
a target data packet 1 arrives at the UPF at 3.8 ms and arrives at the RAN at 7.8 ms, and a scheduling opportunity or scheduling time of 2.2 ms still remains;
a target data packet 2 arrives at the UPF at 5.5 ms and arrives at the RAN at 9.5 ms, and a scheduling opportunity or scheduling time of 0.5 ms still remains; and
a target data packet 3 arrives at the UPF at 9 ms and arrives at the RAN at 13 ms, and in this case, duration has exceeded 10 ms, to be specific, the target data packet 3 arrives at the RAN after the delay budget expires.

In an implementation, the difference obtained by subtracting the first duration from the first delay budget is greater than or equal to zero, or the first duration is less than or equal to the first delay budget.

It is assumed that the first duration is 9.1 ms. It is easy to understand that a target data packet whose first time interval (for example, 9 ms) is less than or equal to the first duration may have scheduling time, for example, the target data packets 1 and 2 have scheduling time; or may have no scheduling time, for example, the target data packet 3 has no scheduling time.

In an implementation, the difference obtained by subtracting the first duration from the first delay budget is greater than or equal to the CN PDB, or the first duration is less than or equal to the difference obtained by subtracting the CN PDB from the first delay budget.

Assuming that the first duration is 5.6 ms, the difference obtained by subtracting the first duration (for example, 5.6 ms) from the first delay budget (for example, 10 ms) is greater than the CN PDB (4 ms). It is easy to understand that a target data packet whose first time interval (for example, 5.5 ms) is less than or equal to the first duration (for example, 5.6 ms), for example, the target data packet 2, may have scheduling time, and the difference obtained by subtracting the first time interval (for example, 5.5 ms) from the first delay budget (for example, 10 ms) is greater than the CN PDB (4 ms).

In an implementation, the difference obtained by subtracting the first duration from the first delay budget is greater than or equal to the PDB, or the first duration is less than or equal to the difference obtained by subtracting the PDB from the first delay budget.

Assuming that the first duration is 4 ms, and the difference obtained by subtracting the first duration (for example, 4 ms) from the first delay budget (for example, 10 ms) is equal to the PDB (6 ms). It is easy to understand that a target data packet whose first time interval (for example, 3.8 ms) is less than or equal to the first duration (for example, 4 ms), for example, the target data packet 2, may have scheduling time, and the difference obtained by subtracting the first time interval (for example, 3.8 ms) from the first delay budget (for example, 10 ms) is greater than the PDB (6 ms).

In an implementation, the difference obtained by subtracting the first duration from the first access network delay budget is greater than or equal to zero, or the first duration is less than or equal to the first access network delay budget.

Assuming that the first duration is 5.6 ms, the difference obtained by subtracting the first duration (for example, 5.6 ms) from the first access network delay budget (for example, 6 ms) is greater than zero. It is easy to understand that a target data packet whose first time interval (for example, 5.5 ms) is less than or equal to the first duration (for example, 5.6 ms), for example, the target data packet 2, may have scheduling time, and the difference obtained by subtracting the first time interval (for example, 5.5 ms) from the first access network delay budget (for example, 6 ms) is greater than zero.

In an implementation, the difference obtained by subtracting the first duration from the first access network delay budget is greater than or equal to the AN PDB, or the first duration is less than or equal to the difference obtained by subtracting the AN PDB from the first access network delay budget.

Assuming that the first duration is 4 ms, and the difference obtained by subtracting the first duration (for example, 4 ms) from the first access network delay budget (for example, 6 ms) is equal to the AN PDB (2 ms). It is easy to understand that a target data packet whose first time interval (for example, 3.8 ms) is less than or equal to the first duration (for example, 4 ms), for example, the target data packet 2, may have scheduling time, and the difference obtained by subtracting the first time interval (for example, 3.8 ms) from the first access network delay budget (for example, 6 ms) is greater than the AN PDB (2 ms).

In an implementation, the first delay budget and the PDB are a first delay budget (for example, a PSDB) and a PDB to which a same QoS identifier (for example, a 5QI) is mapped.

In some embodiments, the second condition, the fifth condition, or the sixth condition further includes:
a quality of service QoS rate does not exceed a guaranteed flow bit rate GFBR.

When all data packets in the target data packet set meet the first condition, a first delay overhead is equal to a delay overhead of the target data packet set. When some data packets in the target data packet set do not meet the first condition, a first delay overhead is a delay overhead of a group of data packets including the some data packets in the target data packet set. (For example, the target data packet set includes 100 data packets, and only 85 data packets of the 100 data packets arrive in a timely manner. In this case, the first delay is time from a moment at which the 1^{st} data packet is received to a moment at which the 85^{th} data packet is successfully transmitted.)

In some embodiments, in a case that a fifth condition is met, it is determined that the target data packet set is an error or a lost data packet set, or it is determined that the target data packet set is a first-type error or lost data packet set, where
the fifth condition includes at least one of the following:
the first delay of the target data packet set is greater than or equal to the first delay budget;
the first access network delay of the target data packet set is greater than or equal to the first access network delay budget;
in a case that the first delay budget or the first access network delay budget has expired, the target data packet set still includes a remaining data packet;
in a case that the first delay budget or the first access network delay budget has expired, a quantity or size of successfully transmitted data packets in the target data packet set is less than or equal to X% of a total data amount of the target data packet set, or a quantity or size of remaining data packets in the target data packet set is greater than or equal to (1-X%) of a total data amount of the target data packet set;
all or some of data packets in the target data packet set are discarded; or
all or some of target data packets in the target data packet set are discarded, where
the remaining data packet is one of the following: a target data packet that is in the target data packet set and that is still cached, has not been transmitted, and/or has not been successfully transmitted, or a data packet that is in the target data packet set and that is still cached, has not been transmitted, or has not been successfully transmitted.

It is easy to understand that, when data packets in the target data packet set are data packets arriving in a case that the first delay budget or the first access network delay budget still has remaining time, all of the target data packet set has an opportunity to be successfully transmitted within the first delay budget or the first access network delay budget, and the first delay budget or the first access network delay budget of the target data packet set can be ensured. If the second data packet exists in the target data packet set, the second data packet may be considered as a data packet that arrives late, and a network or the first communication device cannot ensure that the second data packet is to be transmitted within a corresponding delay budget. This is because the first time interval of the second data packet is greater than or equal to a corresponding delay budget (the first delay budget or the first access network delay budget).

It is easy to understand that a case in which the second data packet causes the first delay to be greater than the first delay budget should not be considered as that the target data packet set is lost or fails; or does not belong to a first-type error or lost data packet set. This is because a failure caused by late arrival of a data packet should not be a responsibility of a network or a communication device.

In a case that the fifth condition includes that "in a case that the first delay budget or the first access network delay budget has expired, a quantity or size of successfully transmitted data packets in the target data packet set is less than or equal to X% of a total data amount of the target data packet set", the fifth condition further includes: the target data packet set has a second requirement, where the second requirement is used for indicating that at least X% of the total data amount of the target data packet set is needed (for example, by an application layer) for using the target data packet set.

In a case that the fifth condition includes that "all or some of data packets in the target data packet set are discarded" or "all or some of target data packets in the target data packet set are discarded", the fifth condition further includes: the target data packet set has a first requirement, where the first requirement is used for indicating that all data packets are needed (for example, by an application layer) for using the target data packet set.

In an implementation, in a case that some data packets in the target data packet set are discarded, the first delay, the second delay, the first access network delay, and the second access network delay of the target data packet set may be considered as infinite values.

In an implementation, in a case that some target data packets in the target data packet set are discarded, or in a case that some target data packets in the target data packet set are discarded, one of the following may be determined: the first delay of the target data packet set is greater than the first delay budget, the first access network delay of the target data packet set is greater than the first access network delay budget, the second delay of the target data packet set is greater than the first delay budget, or the second access network delay of the target data packet set is greater than the first access network delay budget.

In some embodiments, in a case that a sixth condition is met, it is determined that the target data packet set is a second-type error or lost data packet set, it is determined that the target data packet set is a successful data packet set, or it is determined that the target data packet set is not an error or a lost data packet set, where
the sixth condition includes at least one of the following:
the first delay of the target data packet set is less than or equal to the first delay budget;
the second delay of the target data packet set is greater than or equal to the first delay budget;
the first access network delay of the target data packet set is less than or equal to the first access network delay budget; or
the second access network delay of the target data packet set is greater than or equal to the first access network delay budget.

Optionally, the second-type error is not used for calculating a data packet set error rate.

It is easy to understand that a case in which the second data packet causes the first delay to be greater than the first delay budget does not belong to a first-type error or lost data packet set (because a failure caused by late arrival of a data packet should not be a responsibility of a network or the first communication device). In this case, the case may be classified as a second-type error or lost data packet set.

Optionally, in a case that a ninth condition is met, it is determined that the target data packet set is a successful data packet set, or it is determined that the target data packet set is not an error or a lost data packet set, where
the ninth condition includes at least one of the following:
in a case that the first delay budget or the first access network delay budget has not expired, all of data packets in the target data packet set are successfully transmitted;
in a case that the first delay budget or the first access network delay budget has not expired, a quantity or size of successfully transmitted data packets in the target data packet set is greater than or equal to X% of a total data amount of the target data packet set;
no data packet in the target data packet set is discarded; or
no target data packet in the target data packet set is discarded.

In a case that the ninth condition includes that "in a case that the first delay budget or the first access network delay budget has not expired, a quantity or size of successfully transmitted data packets in the target data packet set is greater than or equal to X% of a total data amount of the target data packet set", the ninth condition further includes: the target data packet set has a second requirement, where the second requirement is used for indicating that at least X% of the total data amount of the target data packet set is needed (for example, by an application layer) for using the target data packet set.

In a case that the ninth condition includes that "no data packet in the target data packet set is discarded" or "no target data packet in the target data packet set is discarded", the ninth condition further includes: the target data packet set has a first requirement, where the first requirement is used for indicating that all data packets are needed (for example, by an application layer) for using the target data packet set.

In some embodiments, the discarding or skipping discarding a remaining data packet in a target data packet set in a case that a first delay budget or a first access network delay budget of the target data packet set has expired includes one of the following:
in a case that a seventh condition is met, continuing to transmit or skipping discarding a remaining data packet in the target data packet set; or
in a case that an eighth condition is met, discarding a remaining data packet in the target data packet set,
where
the seventh condition includes at least one of the following:
   the target data packet set has a first requirement, where the first requirement is used for indicating that all data packets are needed (for example, by an application layer) for using the target data packet set; or
   the target data packet set has a second requirement, and a quantity or size of successfully transmitted data packets in the target data packet set has not reached X% of a total data amount of the target data packet set, where the second requirement is used for indicating that at least X% of the total data amount of the target data packet set is needed (for example, by an application layer) for using the target data packet set;
      and
   the eighth condition includes at least one of the following:
      the target data packet set is delay-sensitive; or
      the target data packet set has a second requirement, and a quantity or size of successfully transmitted data packets in the target data packet set is greater than or equal to X% of a total data amount of the target data packet set, where the second requirement is used for indicating that at least X% of the total data amount of the target data packet set is needed (for example, by an application layer) for using the target data packet set; and
      X% represents a percentage value, and may be an integer (for example, 80%) or a non-integer (for example, 80.99%).

In an implementation, a remaining data packet is a data packet (for example, a target data packet) in a target data packet set in a cache (for example, a PDCCH layer cache).

In an implementation, the first delay budget starts from a moment at which the first end receives the 1^{st} data packet in the target data packet set. It is easy to understand that expiration of the first delay budget means that time that has elapsed since the first delay budget started exceeds (for example, is after) duration of the first delay budget.

In an implementation, the first access network delay budget starts from a moment at which the third end receives the 1^{st} data packet in the target data packet set. It is easy to understand that expiration of the first access network delay budget means that time that has elapsed since the first access network delay budget started exceeds (for example, is after) duration of the first access network delay budget.

In an implementation, the seventh condition further includes: the target data packet set is delay-sensitive.

In an implementation, in a case that both the seventh condition and the eighth condition are met, whether to discard or skip discarding a remaining data packet in the target data packet set is determined based on a policy of a network operator or an AF requirement.

In some embodiments, the discarding or skipping discarding a second data packet includes one of the following:
in a case that a third condition is met, continuing to wait for transmission or skipping discarding the second data packet; or
in a case that a fourth condition is met, discarding the second data packet,
where
the third condition includes at least one of the following:
   the first delay budget or the first access network delay budget of the target data packet set has expired;
   the target data packet set has a first requirement, where the first requirement is used for indicating that all data packets are needed (for example, by an application layer) for using the target data packet set; or
   the target data packet set has a second requirement, and a quantity or size of successfully transmitted data packets in the target data packet set has not reached X% of a total data amount of the target data packet set, where the second requirement is used for indicating that X% of the total data amount of the target data packet set is needed (for example, by an application layer) for using the target data packet set;
      and
   the fourth condition includes at least one of the following:
      the first delay budget or the first access network delay budget of the target data packet set has expired;
      the target data packet set is delay-sensitive; or
      the target data packet set has a second requirement, and a quantity or size of successfully transmitted data packets in the target data packet set is greater than or equal to X% of a total data amount of the target data packet set, where the second requirement is used for indicating that X% of the total data amount of the target data packet set is needed (for example, by an application layer) for using the target data packet set; and
      X% represents a percentage value, and may be an integer (for example, 80%) or a non-integer (for example, 80.99%).

The second data packet arrives after the first delay budget or the first access network delay budget of the target data packet set expires. Clearly, in this case, the first delay budget or the first access network delay budget of the target data packet set has expired.

In some embodiments, the third condition further includes: the target data packet set is delay-sensitive.

In some embodiments, the method further includes: obtaining the first delay or the first access network delay; and
performing, by the first communication device, the first operation based on the first delay or the first access network delay.

In an implementation, the first communication device may obtain the first delay or the first access network delay from an AMF.

In this embodiment of this application, how to determine a delay of a data packet set and an error or success of the data packet set can be determined, and processing on a remaining data packet in a data packet set in a case that a delay budget of the data packet set has expired is determined, so that quality of service per data packet set can be better ensured.

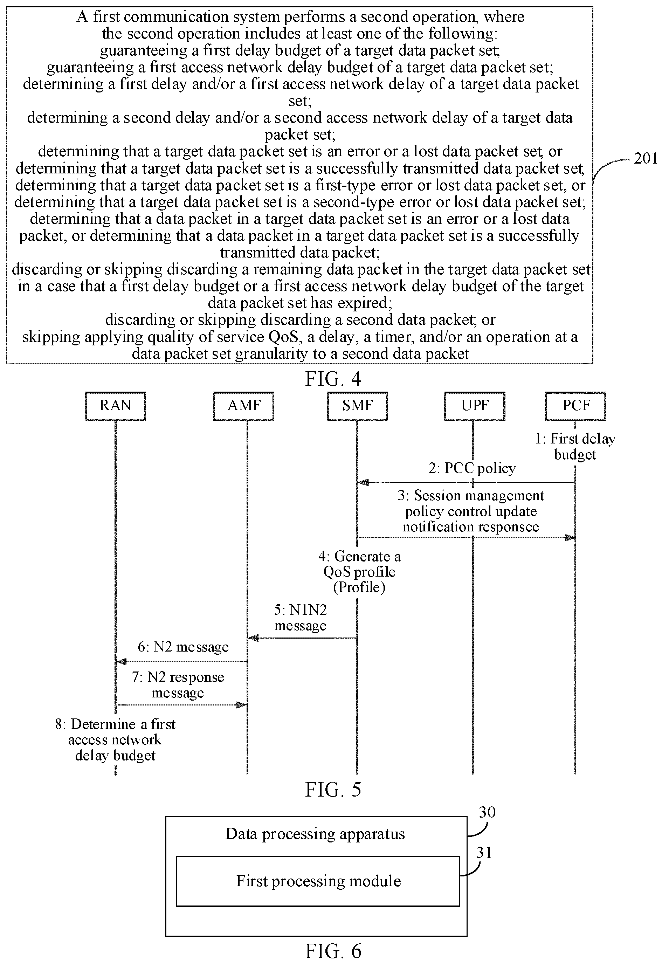

As shown in FIG. 4, an embodiment of the present invention provides a data processing method, applied to a first communication system. The first communication system includes, but is not limited to, a RAN network element and/or a CN network element (for example, a 5GS). The method includes the following steps.

Step 201: The first communication system performs a second operation.

The second operation includes at least one of the following:
guaranteeing a first delay budget (for example, a PSDB) of a target data packet set;
guaranteeing a first access network delay budget (for example, an AN PSDB) of a target data packet set;
determining a first delay and/or a first access network delay of a target data packet set;
determining a second delay and/or a second access network delay of a target data packet set;
determining that a target data packet set is an error or a lost data packet set, or determining that a target data packet set is a successfully transmitted data packet set;
determining that a target data packet set is a first-type error or lost data packet set, or determining that a target data packet set is a second-type error or lost data packet set;
determining that a data packet in a target data packet set is an error or a lost data packet, or determining that a data packet in a target data packet set is a successfully transmitted data packet;
discarding or skipping discarding a remaining data packet in a target data packet set in a case that a first delay budget or a first access network delay budget of the target data packet set has expired;
discarding or skipping discarding a second data packet; or
skipping applying quality of service QoS, a delay, a timer, and/or an operation at a data packet set granularity to a second data packet,
where
the first delay is duration from a moment at which a first end receives the 1^{st} data packet in the target data packet set to a moment at which the last target data packet in the target data packet set is successfully transmitted to a second end;
the second delay is duration from a moment at which a first end receives the 1^{st} data packet in the target data packet set to a moment at which the last data packet in the target data packet set is successfully transmitted to a second end;
the first access network delay is duration from a moment at which a third end receives the 1^{st} data packet in the target data packet set to a moment at which the last target data packet in the target data packet set is successfully transmitted to a fourth end;
the second access network delay is duration from a moment at which a third end receives the 1^{st} data packet in the target data packet set to a moment at which the last data packet in the target data packet set is successfully transmitted to a fourth end;
the first delay budget is a delay budget of the target data packet set; and
the first access network delay budget is an access network delay budget of the target data packet set.

In an implementation, the delay budget of the target data packet set is a delay budget (for example, a PSDB) at a data packet set level.

In an implementation, the access network delay budget of the target data packet set is an access network delay budget (for example, an AN PSDB) at a data packet set level.

In an implementation, the last target data packet may be the last data packet in the target data packet set or may not be the last data packet in the target data packet set. For example, a target data packet set is a set including 10 data packets. The first access network delay budget is 5 ms. For example, first time intervals of the 10 data packets are less than 5 ms. In this case, the last target data packet may be the last data packet in the target data packet set. For example, a first time interval of one of the 10 data packets is greater than 5 ms. In this case, the last target data packet may be the last one of the first nine data packets that have arrived. Details are shown in FIG. 2c.

In an implementation, the guaranteeing a first delay budget (a PSDB) of a target data packet set includes: enabling the first delay or the second delay of the target data packet set to be less than or equal to the first delay budget.

In an implementation, the guaranteeing a first access network delay budget (an AN PSDB) of a target data packet set includes: enabling the first access network delay or the second access network delay of the target data packet set to be less than or equal to the first access network delay budget.

In some embodiments,
the delay budget of the target data packet set is an upper limit of the duration from the moment at which the first end receives the 1^{st} data packet in the target data packet set to the moment at which the last data packet (for example, the last target data packet) in the target data packet set is successfully transmitted to the second end; and
the access network delay budget of the target data packet set is an upper limit of the duration from the moment at which the third end receives the 1^{st} data packet in the target data packet set to the moment at which the last data packet (for example, the last target data packet) in the target data packet set is successfully transmitted to the fourth end.

In an implementation, the 1^{st} data packet is the 1^{st} arriving data packet or the 1^{st} received data packet in the target data packet set.

In some embodiments,
the first end includes one of the following: a terminal or a Uu interface; and the second end includes one of the following: an anchor gateway or an N6 interface;
   or
the first end includes one of the following: an anchor gateway or an N6 interface; and the second end includes one of the following: a terminal or a Uu interface;
   or
the first end includes one of the following: a terminal or a Uu interface; and the second end includes one of the following: a RAN or an N3 interface;
   or
the first end includes one of the following: a RAN or an N3 interface; and the second end includes one of the following: a terminal or a Uu interface.

In some embodiments,
the third end includes one of the following: a terminal or a Uu interface; and the fourth end includes one of the following: a RAN or an N3 interface;
   or
the third end includes one of the following: a RAN or an N3 interface; and the fourth end includes one of the following: a terminal or a Uu interface.

In an implementation, in a downlink direction, the first delay budget is an upper limit of duration from a moment at which a RAN network element or an N3 interface receives the 1^{st} data packet in the target data packet set to a moment at which the last target data packet in the target data packet set is successfully transmitted to UE.

In an implementation, in an uplink direction, the first delay budget is an upper limit of duration from a moment at which UE (for example, a NAS layer or an AS layer of the UE) receives the 1^{st} data packet in the target data packet set to a moment at which the last target data packet in the target data packet set is successfully transmitted to a RAN (for example, including a residence delay in the RAN) or an N3 interface.

In another implementation, in a downlink direction, the first delay budget is an upper limit of duration from a moment at which an anchor gateway (for example, a PSA) or an N6 interface receives the 1^{st} data packet in the target data packet set to a moment at which the last target data packet in the target data packet set is successfully transmitted to UE.

In an implementation, in an uplink direction, the first delay budget is an upper limit of duration from a moment at which UE (for example, a NAS layer or an AS layer of the UE) receives the 1^{st} data packet in the target data packet set to a moment at which the last target data packet in the target data packet set is successfully transmitted to an anchor gateway or an N6 interface.

In an implementation, an N3 interface is a user plane interface between a CN and a RAN.

In an implementation, a Uu interface is an interface between a terminal and a RAN.

In some embodiments, the target data packet is a data packet that is in the target data packet set and that meets a first condition, where
the first condition includes at least one of the following:
the data packet is received before the first delay budget expires or before the first access network delay budget expires; or
a first time interval meets one of the following: a difference obtained by subtracting the first time interval from the first delay budget is greater than or equal to a CN PDB; a difference obtained by subtracting the first time interval from the first delay budget is greater than or equal to a core network delay of the data packet; a difference obtained by subtracting the first time interval from the first delay budget is greater than or equal to a PDB; a difference obtained by subtracting the first time interval from the first delay budget is greater than or equal to zero; a difference obtained by subtracting the first time interval from the first access network delay budget is greater than or equal to zero; a difference obtained by subtracting the first time interval from the first access network delay budget is greater than or equal to an AN PDB; or the first time interval is less than or equal to one of the following: the first delay budget, the first access network delay budget, first duration, a difference obtained by subtracting a CN PDB from the first delay budget, a difference obtained by subtracting a PDB from the first delay budget, a difference obtained by subtracting an AN PDB from the first access network delay budget, or a difference obtained by subtracting a core network delay of the data packet from the first delay budget, where
the first time interval is a time interval between receiving time of the target data packet and receiving time of the 1^{st} arriving data packet in the target data packet set.

Receiving time of a data packet may be time at which the data packet is received. The receiving time of the data packet is equivalent to arrival time of the data packet.

In an implementation, the first delay budget or the first access network delay budget starts from receiving time of the 1^{st} received data packet of the target data packet.

The first duration may be less than or equal to one of the following: the first delay budget or the first access network delay budget.

It is easy to understand that a difference obtained by subtracting the first duration from the first delay budget or the first access network delay budget should be sufficient for a first communication system or the first communication device to successfully transmit a data packet (for example, one data packet) to the second end. In other words, the first duration is less than or equal to (a difference obtained by subtracting "time (for example, minimum time needed) needed for the first communication system or the first communication device to successfully transmit a data packet (for example, one data packet) to the second end" from "the first delay budget or the first access network delay budget").

In an implementation, the difference obtained by subtracting the first duration from the first delay budget is greater than or equal to one of the following: a data packet-level delay budget (for example, a PDB), a data packet-level core network delay budget (for example, a CN PDB), or zero.

In an implementation, the difference obtained by subtracting the first duration from the first access network delay budget is greater than or equal to one of the following: a data packet-level access network delay budget (for example, an AN PDB) or zero.

In some embodiments, the second data packet is a data packet that is in the target data packet set and that meets a second condition, where
the second condition includes at least one of the following:
a first time interval is greater than or equal to one of the following: the first delay budget, the first access network delay budget, or first duration; or
the data packet is received after the first delay budget expires or after the first access network delay budget expires, where
the first time interval is a time interval between arrival time of the target data packet and arrival time of the 1^{st} arriving data packet in the target data packet set.

It is easy to understand that, if the second data packet (a data packet whose arrival time is later than a timeout period of the first delay budget) exists in the target data packet set, a delay overhead of the target data packet set is inevitably greater than the first delay budget. However, this case is not caused by a failure of the first communication system (for example, a 5GS) or the first communication device to guarantee the first delay budget or the first access network delay budget, but is caused by late arrival of a data packet. Therefore, this case should not be considered during determining of a data packet set loss or error (for example, a PDU set error).

The 1^{st} data packet is the 1^{st} arriving data packet in the target data packet set.

It is easy to understand that only a target data packet whose first time interval is less than the first delay budget may be possibly scheduled before the first delay budget expires.

Optionally, the first duration meets one of the following:
a difference obtained by subtracting the first duration from the first delay budget is greater than or equal to a CN PDB;
a difference obtained by subtracting the first duration from the first delay budget is greater than or equal to a core network delay of the data packet;
a difference obtained by subtracting the first duration from the first delay budget is greater than or equal to a PDB;
a difference obtained by subtracting the first duration from the first delay budget is greater than or equal to zero;
a difference obtained by subtracting the first duration from the first access network delay budget is greater than or equal to zero;
a difference obtained by subtracting the first duration from the first access network delay budget is greater than or equal to an AN PDB;
the first duration is less than or equal to the first delay budget;
the first duration is less than or equal to a difference obtained by subtracting a CN PDB from the first delay budget;
the first duration is less than or equal to a difference obtained by subtracting a core network delay of the data packet from the first delay budget;
the first duration is less than or equal to a difference obtained by subtracting a PDB from the first delay budget;
the first duration is less than or equal to the first access network delay budget; or
the first duration is less than or equal to a difference obtained by subtracting an AN PDB from the first access network delay budget.

In an implementation, in a case that the first time interval can be equal to the first duration, the difference obtained by subtracting the first duration from the first delay budget, or the difference obtained by subtracting the first duration from the first access network delay budget cannot be equal to zero, but needs to be greater than zero; or in a case that the first time interval can be equal to the first duration, the difference obtained by subtracting the first duration from the first delay budget, or the difference obtained by subtracting the first duration from the first access network delay budget can be equal to zero. It is easy to understand that, in this way, the difference obtained by subtracting the first time interval from the first delay budget can always be greater than zero, or the difference obtained by subtracting the first time interval from the first access network delay budget can always be greater than zero. The first time interval is a time interval between receiving time of the target data packet and receiving time of the 1^{st} arriving data packet in the target data packet set.

For example, the AN PSDB is a data packet set delay budget between UE and a RAN, for example, 6 ms;
the PSDB is a data packet set delay budget between the UE and a PSA UPF, for example, 10 ms; transmission of all data packets in the target data packet set needs to be completed within 10 ms;
the PDB is a data packet delay budget between the UE and the PSA UPF, for example, 5 ms;
the AN PDB is a data packet delay budget between the UE and the RAN, for example, 1 ms;
the CN PDB is a data packet delay budget between the RAN and the PSA UPF, for example, 4 ms, in other words, a core network delay overhead of a data packet is a data packet delay budget between the RAN and the PSA UPF, for example, 4 ms;
the 1^{st} data packet in the target data packet set arrives at the UPF at 0 ms and arrives at the RAN at 4 ms, and a scheduling opportunity or scheduling time of 6 ms still remains;
a target data packet 1 arrives at the UPF at 3.8 ms and arrives at the RAN at 7.8 ms, and a scheduling opportunity or scheduling time of 2.2 ms still remains;
a target data packet 2 arrives at the UPF at 5.5 ms and arrives at the RAN at 9.5 ms, and a scheduling opportunity or scheduling time of 0.5 ms still remains; and
a target data packet 3 arrives at the UPF at 9 ms and arrives at the RAN at 13 ms, and in this case, duration has exceeded 10 ms, to be specific, the target data packet 3 arrives at the RAN after the delay budget expires.

In an implementation, the difference obtained by subtracting the first duration from the first delay budget is greater than or equal to zero, or the first duration is less than or equal to the first delay budget.

It is assumed that the first duration is 9.1 ms. It is easy to understand that a target data packet whose first time interval (for example, 9 ms) is less than or equal to the first duration may have scheduling time, for example, the target data packets 1 and 2 have scheduling time; or may have no scheduling time, for example, the target data packet 3 has no scheduling time.

In an implementation, the difference obtained by subtracting the first duration from the first delay budget is greater than or equal to the CN PDB, or the first duration is less than or equal to the difference obtained by subtracting the CN PDB from the first delay budget.

Assuming that the first duration is 5.6 ms, the difference obtained by subtracting the first duration (for example, 5.6 ms) from the first delay budget (for example, 10 ms) is greater than the CN PDB (4 ms). It is easy to understand that a target data packet whose first time interval (for example, 5.5 ms) is less than or equal to the first duration (for example, 5.6 ms), for example, the target data packet 2, may have scheduling time, and the difference obtained by subtracting the first time interval (for example, 5.5 ms) from the first delay budget (for example, 10 ms) is greater than the CN PDB (4 ms).

In an implementation, the difference obtained by subtracting the first duration from the first delay budget is greater than or equal to the PDB, or the first duration is less than or equal to the difference obtained by subtracting the PDB from the first delay budget.

Assuming that the first duration is 4 ms, and the difference obtained by subtracting the first duration (for example, 4 ms) from the first delay budget (for example, 10 ms) is equal to the PDB (6 ms). It is easy to understand that a target data packet whose first time interval (for example, 3.8 ms) is less than or equal to the first duration (for example, 4 ms), for example, the target data packet 2, may have scheduling time, and the difference obtained by subtracting the first time interval (for example, 3.8 ms) from the first delay budget (for example, 10 ms) is greater than the PDB (6 ms).

In an implementation, the difference obtained by subtracting the first duration from the first access network delay budget is greater than or equal to zero, or the first duration is less than or equal to the first access network delay budget.

Assuming that the first duration is 5.6 ms, the difference obtained by subtracting the first duration (for example, 5.6 ms) from the first access network delay budget (for example, 6 ms) is greater than zero. It is easy to understand that a target data packet whose first time interval (for example, 5.5 ms) is less than or equal to the first duration (for example, 5.6 ms), for example, the target data packet 2, may have scheduling time, and the difference obtained by subtracting the first time interval (for example, 5.5 ms) from the first access network delay budget (for example, 6 ms) is greater than zero.

In an implementation, the difference obtained by subtracting the first duration from the first access network delay budget is greater than or equal to the AN PDB, or the first duration is less than or equal to the difference obtained by subtracting the AN PDB from the first access network delay budget.

Assuming that the first duration is 4 ms, and the difference obtained by subtracting the first duration (for example, 4 ms) from the first access network delay budget (for example, 6 ms) is equal to the AN PDB (2 ms). It is easy to understand that a target data packet whose first time interval (for example, 3.8 ms) is less than or equal to the first duration (for example, 4 ms), for example, the target data packet 2, may have scheduling time, and the difference obtained by subtracting the first time interval (for example, 3.8 ms) from the first access network delay budget (for example, 6 ms) is greater than the AN PDB (2 ms).

In an implementation, the first delay budget and the PDB are a first delay budget (for example, a PSDB) and a PDB to which a same QoS identifier (for example, a 5QI) is mapped.

In some embodiments, the second condition, the fifth condition, or the sixth condition further includes:
a quality of service QoS rate does not exceed a guaranteed flow bit rate GFBR.

When all data packets in the target data packet set meet the first condition, a first delay overhead is equal to a delay overhead of the target data packet set. When some data packets in the target data packet set do not meet the first condition, a first delay overhead is a delay overhead of a group of data packets including the some data packets in the target data packet set. (For example, the target data packet set includes 100 data packets, and only 85 data packets of the 100 data packets arrive in a timely manner. In this case, the first delay is time from a moment at which the 1^{st} data packet is received to a moment at which the 85^{th} data packet is successfully transmitted.)

In some embodiments, in a case that a fifth condition is met, it is determined that the target data packet set is an error or a lost data packet set, or it is determined that the target data packet set is a first-type error or lost data packet set, where
the fifth condition includes at least one of the following:
the first delay of the target data packet set is greater than or equal to the first delay budget;
the first access network delay of the target data packet set is greater than or equal to the first access network delay budget;
in a case that the first delay budget or the first access network delay budget has expired, the target data packet set still includes a remaining data packet;
in a case that the first delay budget or the first access network delay budget has expired, a quantity or size of successfully transmitted data packets in the target data packet set is less than or equal to X% of a total data amount of the target data packet set, or a quantity or size of remaining data packets in the target data packet set is greater than or equal to (1-X%) of a total data amount of the target data packet set;
all or some of data packets in the target data packet set are discarded; or
all or some of target data packets in the target data packet set are discarded, where
the remaining data packet is one of the following: a target data packet that is in the target data packet set and that is still cached, has not been transmitted, and/or has not been successfully transmitted, or a data packet that is in the target data packet set and that is still cached, has not been transmitted, or has not been successfully transmitted.

It is easy to understand that, when data packets in the target data packet set are data packets arriving in a case that the first delay budget or the first access network delay budget still has remaining time, all of the target data packet set has an opportunity to be successfully transmitted within the first delay budget or the first access network delay budget, and the first delay budget or the first access network delay budget of the target data packet set can be ensured. If the second data packet exists in the target data packet set, the second data packet may be considered as a data packet that arrives late, and a network or the first communication system cannot ensure that the second data packet is to be transmitted within a corresponding delay budget. This is because the first time interval of the second data packet is greater than or equal to a corresponding delay budget (the first delay budget or the first access network delay budget).

It is easy to understand that a case in which the second data packet causes the first delay to be greater than the first delay budget should not be considered as that the target data packet set is lost or fails; or does not belong to a first-type error or lost data packet set. This is because a failure caused by late arrival of a data packet should not be a responsibility of a network or a communication device.

In a case that the fifth condition includes that "in a case that the first delay budget or the first access network delay budget has expired, a quantity or size of successfully transmitted data packets in the target data packet set is less than or equal to X% of a total data amount of the target data packet set", the fifth condition further includes: the target data packet set has a second requirement, where the second requirement is used for indicating that at least X% of the total data amount of the target data packet set is needed (for example, by an application layer) for using the target data packet set.

In a case that the fifth condition includes that "all or some of data packets in the target data packet set are discarded" or "all or some of target data packets in the target data packet set are discarded", the fifth condition further includes: the target data packet set has a first requirement, where the first requirement is used for indicating that all data packets are needed (for example, by an application layer) for using the target data packet set.

In an implementation, in a case that some data packets in the target data packet set are discarded, the first delay, the second delay, the first access network delay, and the second access network delay of the target data packet set may be considered as infinite values.

In an implementation, in a case that some target data packets in the target data packet set are discarded, or in a case that some target data packets in the target data packet set are discarded, one of the following may be determined: the first delay of the target data packet set is greater than the first delay budget, the first access network delay of the target data packet set is greater than the first access network delay budget, the second delay of the target data packet set is greater than the first delay budget, or the second access network delay of the target data packet set is greater than the first access network delay budget.

In some embodiments, in a case that a sixth condition is met, it is determined that the target data packet set is a second-type error or lost data packet set, it is determined that the target data packet set is a successful data packet set, or it is determined that the target data packet set is not an error or a lost data packet set, where
the sixth condition includes at least one of the following:
the first delay of the target data packet set is less than or equal to the first delay budget;
the second delay of the target data packet set is greater than or equal to the first delay budget;
the first access network delay of the target data packet set is less than or equal to the first access network delay budget; or
the second access network delay of the target data packet set is greater than or equal to the first access network delay budget.

Optionally, the second-type error is not used for calculating a data packet set error rate.

It is easy to understand that a case in which the second data packet causes the first delay to be greater than the first delay budget does not belong to a first-type error or lost data packet set (because a failure caused by late arrival of a data packet should not be a responsibility of a network or the first communication system). In this case, the case may be classified as a second-type error or lost data packet set.

Optionally, in a case that a ninth condition is met, it is determined that the target data packet set is a successful data packet set, or it is determined that the target data packet set is not an error or a lost data packet set, where
the ninth condition includes at least one of the following:
in a case that the first delay budget or the first access network delay budget has not expired, all of data packets in the target data packet set are successfully transmitted;
in a case that the first delay budget or the first access network delay budget has not expired, a quantity or size of successfully transmitted data packets in the target data packet set is greater than or equal to X% of a total data amount of the target data packet set;
no data packet in the target data packet set is discarded; or
no target data packet in the target data packet set is discarded.

In a case that the ninth condition includes that "in a case that the first delay budget or the first access network delay budget has not expired, a quantity or size of successfully transmitted data packets in the target data packet set is greater than or equal to X% of a total data amount of the target data packet set", the ninth condition further includes: the target data packet set has a second requirement, where the second requirement is used for indicating that at least X% of the total data amount of the target data packet set is needed (for example, by an application layer) for using the target data packet set.

In a case that the ninth condition includes that "no data packet in the target data packet set is discarded" or "no target data packet in the target data packet set is discarded", the ninth condition further includes: the target data packet set has a first requirement, where the first requirement is used for indicating that all data packets are needed (for example, by an application layer) for using the target data packet set.

In some embodiments, the discarding or skipping discarding a remaining data packet in a target data packet set in a case that a first delay budget or a first access network delay budget of the target data packet set has expired includes one of the following:
in a case that a seventh condition is met, continuing to transmit or skipping discarding a remaining data packet in the target data packet set; or
in a case that an eighth condition is met, discarding a remaining data packet in the target data packet set,
where
the seventh condition includes at least one of the following:
   the target data packet set has a first requirement, where the first requirement is used for indicating that all data packets are needed (for example, by an application layer) for using the target data packet set; or
   the target data packet set has a second requirement, and a quantity or size of successfully transmitted data packets in the target data packet set has not reached X% of a total data amount of the target data packet set, where the second requirement is used for indicating that at least X% of the total data amount of the target data packet set is needed (for example, by an application layer) for using the target data packet set;
      and
   the eighth condition includes at least one of the following:
      the target data packet set is delay-sensitive; or
      the target data packet set has a second requirement, and a quantity or size of successfully transmitted data packets in the target data packet set is greater than or equal to X% of a total data amount of the target data packet set, where the second requirement is used for indicating that at least X% of the total data amount of the target data packet set is needed (for example, by an application layer) for using the target data packet set; and
      X% represents a percentage value, and may be an integer (for example, 80%) or a non-integer (for example, 80.99%).

In an implementation, a remaining data packet is a data packet (for example, a target data packet) in a target data packet set in a cache (for example, a PDCCH layer cache).

In an implementation, the first delay budget starts from a moment at which the first end receives the 1^{st} data packet in the target data packet set. It is easy to understand that expiration of the first delay budget means that time that has elapsed since the first delay budget started exceeds (for example, is after) duration of the first delay budget.

In an implementation, the first access network delay budget starts from a moment at which the third end receives the 1^{st} data packet in the target data packet set. It is easy to understand that expiration of the first access network delay budget means that time that has elapsed since the first access network delay budget started exceeds (for example, is after) duration of the first access network delay budget.

In an implementation, the seventh condition further includes: the target data packet set is delay-sensitive.

In an implementation, in a case that both the seventh condition and the eighth condition are met, whether to discard or skip discarding a remaining data packet in the target data packet set is determined based on a policy of a network operator or an AF requirement.

In some embodiments, the discarding or skipping discarding a second data packet includes one of the following:
in a case that a third condition is met, continuing to wait for transmission or skipping discarding the second data packet; or
in a case that a fourth condition is met, discarding the second data packet,
where
the third condition includes at least one of the following:
   the first delay budget or the first access network delay budget of the target data packet set has expired;
   the target data packet set has a first requirement, where the first requirement is used for indicating that all data packets are needed (for example, by an application layer) for using the target data packet set; or
   the target data packet set has a second requirement, and a quantity or size of successfully transmitted data packets in the target data packet set has not reached X% of a total data amount of the target data packet set, where the second requirement is used for indicating that X% of the total data amount of the target data packet set is needed (for example, by an application layer) for using the target data packet set;
      and
   the fourth condition includes at least one of the following:
      the first delay budget or the first access network delay budget of the target data packet set has expired;
      the target data packet set is delay-sensitive; or
      the target data packet set has a second requirement, and a quantity or size of successfully transmitted data packets in the target data packet set is greater than or equal to X% of a total data amount of the target data packet set, where the second requirement is used for indicating that X% of the total data amount of the target data packet set is needed (for example, by an application layer) for using the target data packet set; and
      X% represents a percentage value, and may be an integer (for example, 80%) or a non-integer (for example, 80.99%).

The second data packet arrives after the first delay budget or the first access network delay budget of the target data packet set expires. Clearly, in this case, the first delay budget or the first access network delay budget of the target data packet set has expired.

In some embodiments, the third condition further includes: the target data packet set is delay-sensitive.

In some embodiments, the method further includes: obtaining the first delay or the first access network delay; and
performing, by the first communication system, a first operation based on the first delay or the first access network delay.

In this embodiment of this application, how to determine a delay of a data packet set and an error or success of the data packet set can be determined, and processing on a remaining data packet in a data packet set in a case that a delay budget of the data packet set has expired is determined, so that quality of service per data packet set can be better ensured.

### Application scenario 1:

In the application scenario 1 of the embodiments of the present invention, a process of sending a first policy by a third communication device to a second communication device, reporting a network resource usage level by a user plane, and discarding a data packet by the second communication device in a case that a first communication device is a RAN, the second communication device is a UPF, the third communication device is a PCF, and the fourth communication device is an SMF is mainly described. As shown in FIG. 5, the following steps are included.

Step 1: An AF sends a first delay budget to the PCF through an NEF, or a first delay budget is preconfigured on the PCF.

Step 2: The PCF sends a policy control and charging (Policy Control and Charging, PCC) policy to the SMF, where the PCC policy includes the first delay budget.

Step 3: The SMF returns a session management policy control update notification response to the PCF.

Step 4: The SMF generates a QoS profile (Profile) based on the PCC policy, where the QoS profile includes the first delay budget.

Step 5: The SMF sends an N1N2 message to an AMF, where the N1N2 message carries the QoS profile.

Step 6: The AMF sends an N2 message to the RAN, where the N2 message carries the QoS profile.

Step 7: The RAN returns an N2 response message to the AMF.

Step 8: The RAN determines a first access network delay budget based on the first delay budget.

The RAN performs a first operation. For details, refer to the embodiment of FIG. 3. Details are not described herein again.

The data processing method provided in the embodiments of this application may be performed by a data processing apparatus. In the embodiments of this application, a data processing apparatus provided in the embodiments of this application is described by using an example in which the data processing apparatus performs the data processing method.

FIG. 6 is a diagram of a structure of a data processing apparatus according to an embodiment of this application. The apparatus is applied to a first communication device. As shown in FIG. 6, the data processing apparatus 30 includes:
a first processing module 31, configured to perform a first operation, where
the first operation includes at least one of the following:
   guaranteeing a first delay budget (for example, a PSDB) of a target data packet set;
   guaranteeing a first access network delay budget (for example, an AN PSDB) of a target data packet set;
   determining a first delay and/or a first access network delay of a target data packet set;
   determining a second delay and/or a second access network delay of a target data packet set;
   determining that a target data packet set is an error or a lost data packet set, or determining that a target data packet set is a successfully transmitted data packet set;
   determining that a target data packet set is a first-type error or lost data packet set, or determining that a target data packet set is a second-type error or lost data packet set;
   determining that a data packet in a target data packet set is an error or a lost data packet, or determining that a data packet in a target data packet set is a successfully transmitted data packet;
   discarding or skipping discarding a remaining data packet in a target data packet set in a case that a first delay budget or a first access network delay budget of the target data packet set has expired;
   discarding or skipping discarding a second data packet; or
   skipping applying quality of service QoS, a delay, a timer, and/or an operation at a data packet set granularity to a second data packet,
   where
   the first delay is duration from a moment at which a first end receives the 1^{st} data packet in the target data packet set to a moment at which the last target data packet in the target data packet set is successfully transmitted to a second end;
   the second delay is duration from a moment at which a first end receives the 1^{st} data packet in the target data packet set to a moment at which the last data packet in the target data packet set is successfully transmitted to a second end;
   the first access network delay is duration from a moment at which a third end receives the 1^{st} data packet in the target data packet set to a moment at which the last target data packet in the target data packet set is successfully transmitted to a fourth end;
   the second access network delay is duration from a moment at which a third end receives the 1^{st} data packet in the target data packet set to a moment at which the last data packet in the target data packet set is successfully transmitted to a fourth end;
   the first delay budget is a delay budget of the target data packet set; and
   the first access network delay budget is an access network delay budget of the target data packet set.

In some embodiments,
the delay budget of the target data packet set is an upper limit of the duration from the moment at which the first end receives the 1^{st} data packet in the target data packet set to the moment at which the last data packet (for example, the last target data packet) in the target data packet set is successfully transmitted to the second end; and
the access network delay budget of the target data packet set is an upper limit of the duration from the moment at which the third end receives the 1^{st} data packet in the target data packet set to the moment at which the last data packet (for example, the last target data packet) in the target data packet set is successfully transmitted to the fourth end.

In some embodiments,
the first end includes one of the following: a terminal or a Uu interface; and the second end includes one of the following: an anchor gateway or an N6 interface;
   or
the first end includes one of the following: an anchor gateway or an N6 interface; and the second end includes one of the following: a terminal or a Uu interface;
   or
the first end includes one of the following: a terminal or a Uu interface; and the second end includes one of the following: a RAN or an N3 interface;
   or
the first end includes one of the following: a RAN or an N3 interface; and the second end includes one of the following: a terminal or a Uu interface.

In some embodiments,
the third end includes one of the following: a terminal or a Uu interface; and the fourth end includes one of the following: a RAN or an N3 interface;
   or
the third end includes one of the following: a RAN or an N3 interface; and the fourth end includes one of the following: a terminal or a Uu interface.

In some embodiments,
the target data packet is a data packet that is in the target data packet set and that meets a first condition, where
the first condition includes at least one of the following:
   the data packet is received before the first delay budget expires or before the first access network delay budget expires; or
   a first time interval meets one of the following: a difference obtained by subtracting the first time interval from the first delay budget is greater than or equal to a CN PDB; a difference obtained by subtracting the first time interval from the first delay budget is greater than or equal to a core network delay of the data packet; a difference obtained by subtracting the first time interval from the first delay budget is greater than or equal to a PDB; a difference obtained by subtracting the first time interval from the first delay budget is greater than or equal to zero; a difference obtained by subtracting the first time interval from the first access network delay budget is greater than or equal to zero; a difference obtained by subtracting the first time interval from the first access network delay budget is greater than or equal to an AN PDB; or the first time interval is less than or equal to one of the following: the first delay budget, the first access network delay budget, first duration, a difference obtained by subtracting a CN PDB from the first delay budget, a difference obtained by subtracting a PDB from the first delay budget, a difference obtained by subtracting an AN PDB from the first access network delay budget, or a difference obtained by subtracting a core network delay of the data packet from the first delay budget, where
   the first time interval is a time interval between receiving time of the target data packet and receiving time of the 1^{st} arriving data packet in the target data packet set.

In some embodiments,
the second data packet is a data packet that is in the target data packet set and that meets a second condition, where
the second condition includes at least one of the following:
   a first time interval is greater than or equal to one of the following: the first delay budget, the first access network delay budget, or first duration; or
   the data packet is received after the first delay budget expires or after the first access network delay budget expires,
   where
   the first time interval is a time interval between arrival time of the target data packet and arrival time of the 1^{st} arriving data packet in the target data packet set.

In some embodiments, the first processing module 31 is configured to: in a case that a fifth condition is met, determine that the target data packet set is an error or a lost data packet set, or determine that the target data packet set is a first-type error or a lost data packet set.

Optionally, the first duration meets one of the following:
a difference obtained by subtracting the first duration from the first delay budget is greater than or equal to a CN PDB;
a difference obtained by subtracting the first duration from the first delay budget is greater than or equal to a core network delay of the data packet;
a difference obtained by subtracting the first duration from the first delay budget is greater than or equal to a PDB;
a difference obtained by subtracting the first duration from the first delay budget is greater than or equal to zero;
a difference obtained by subtracting the first duration from the first access network delay budget is greater than or equal to zero;
a difference obtained by subtracting the first duration from the first access network delay budget is greater than or equal to an AN PDB;
the first duration is less than or equal to the first delay budget;
the first duration is less than or equal to a difference obtained by subtracting a CN PDB from the first delay budget;
the first duration is less than or equal to a difference obtained by subtracting a core network delay of the data packet from the first delay budget;
the first duration is less than or equal to a difference obtained by subtracting a PDB from the first delay budget;
the first duration is less than or equal to the first access network delay budget; or
the first duration is less than or equal to a difference obtained by subtracting an AN PDB from the first access network delay budget; and
the fifth condition includes at least one of the following:
   the first delay of the target data packet set is greater than or equal to the first delay budget;
   the first access network delay of the target data packet set is greater than or equal to the first access network delay budget;
   in a case that the first delay budget or the first access network delay budget has expired, the target data packet set still includes a remaining data packet;
   in a case that the first delay budget or the first access network delay budget has expired, a quantity or size of successfully transmitted data packets in the target data packet set is less than or equal to X% of a total data amount of the target data packet set, or a quantity or size of remaining data packets in the target data packet set is greater than or equal to (1-X%) of a total data amount of the target data packet set;
   all or some of data packets in the target data packet set are discarded; or
   all or some of target data packets in the target data packet set are discarded, where
   the remaining data packet is one of the following: a target data packet that is in the target data packet set and that is still cached, has not been transmitted, and/or has not been successfully transmitted, or a data packet that is in the target data packet set and that is still cached, has not been transmitted, or has not been successfully transmitted.

In some embodiments, the first processing module 31 is configured to: in a case that a sixth condition is met, determine that the target data packet set is a second-type error or a lost data packet set, determine that the target data packet set is a successful data packet set, or determine that the target data packet set is not an error or a lost data packet set, where
the sixth condition includes at least one of the following:
the first delay of the target data packet set is less than or equal to the first delay budget;
the second delay of the target data packet set is greater than or equal to the first delay budget;
the first access network delay of the target data packet set is less than or equal to the first access network delay budget; or
the second access network delay of the target data packet set is greater than or equal to the first access network delay budget.

Optionally, the second-type error is not used for calculating a data packet set error rate.

In some embodiments, the second condition, the fifth condition, or the sixth condition further includes:
a quality of service QoS rate does not exceed a guaranteed flow bit rate (Guaranteed Flow Bit Rate, GFBR).

Optionally, the first processing module 31 is configured to: in a case that a ninth condition is met, determine that the target data packet set is a successful data packet set, or determine that the target data packet set is not an error or a lost data packet set, where
the ninth condition includes at least one of the following:
in a case that the first delay budget or the first access network delay budget has not expired, all of data packets in the target data packet set are successfully transmitted;
in a case that the first delay budget or the first access network delay budget has not expired, a quantity or size of successfully transmitted data packets in the target data packet set is greater than or equal to X% of a total data amount of the target data packet set;
no data packet in the target data packet set is discarded; or
no target data packet in the target data packet set is discarded.

In a case that the ninth condition includes that "in a case that the first delay budget or the first access network delay budget has not expired, a quantity or size of successfully transmitted data packets in the target data packet set is greater than or equal to X% of a total data amount of the target data packet set", the ninth condition further includes: the target data packet set has a second requirement, where the second requirement is used for indicating that at least X% of the total data amount of the target data packet set is needed (for example, by an application layer) for using the target data packet set.

In a case that the ninth condition includes that "no data packet in the target data packet set is discarded" or "no target data packet in the target data packet set is discarded", the ninth condition further includes: the target data packet set has a first requirement, where the first requirement is used for indicating that all data packets are needed (for example, by an application layer) for using the target data packet set.

In some embodiments, the discarding or skipping discarding a remaining data packet in a target data packet set in a case that a first delay budget or a first access network delay budget of the target data packet set has expired includes one of the following:
in a case that a seventh condition is met, continuing to transmit or skipping discarding a remaining data packet in the target data packet set; or
in a case that an eighth condition is met, discarding a remaining data packet in the target data packet set,
where
the seventh condition includes at least one of the following:
   the target data packet set has a first requirement, where the first requirement is used for indicating that all data packets are needed (for example, by an application layer) for using the target data packet set; or
   the target data packet set has a second requirement, and a quantity or size of successfully transmitted data packets in the target data packet set has not reached X% of a total data amount of the target data packet set, where the second requirement is used for indicating that at least X% of the total data amount of the target data packet set is needed (for example, by an application layer) for using the target data packet set;
      and
   the eighth condition includes at least one of the following:
      the target data packet set is delay-sensitive; or
      the target data packet set has a second requirement, and a quantity or size of successfully transmitted data packets in the target data packet set is greater than or equal to X% of a total data amount of the target data packet set, where the second requirement is used for indicating that at least X% of the total data amount of the target data packet set is needed (for example, by an application layer) for using the target data packet set; and
      X% represents a percentage value, and may be an integer (for example, 80%) or a non-integer (for example, 80.99%).

In some embodiments, the discarding or skipping discarding a second data packet includes one of the following:
in a case that a third condition is met, continuing to wait for transmission or skipping discarding the second data packet; or
in a case that a fourth condition is met, discarding the second data packet,
where
the third condition includes at least one of the following:
   the first delay budget or the first access network delay budget of the target data packet set has expired;
   the target data packet set has a first requirement, where the first requirement is used for indicating that all data packets are needed (for example, by an application layer) for using the target data packet set; or
   the target data packet set has a second requirement, and a quantity or size of successfully transmitted data packets in the target data packet set has not reached X% of a total data amount of the target data packet set, where the second requirement is used for indicating that X% of the total data amount of the target data packet set is needed (for example, by an application layer) for using the target data packet set;
      and
   the fourth condition includes at least one of the following:
      the first delay budget or the first access network delay budget of the target data packet set has expired;
      the target data packet set is delay-sensitive; or
      the target data packet set has a second requirement, and a quantity or size of successfully transmitted data packets in the target data packet set is greater than or equal to X% of a total data amount of the target data packet set, where the second requirement is used for indicating that X% of the total data amount of the target data packet set is needed (for example, by an application layer) for using the target data packet set; and
      X% represents a percentage value, and may be an integer (for example, 80%) or a non-integer (for example, 80.99%).

In some embodiments, the third condition further includes: the target data packet set is delay-sensitive.

In some embodiments, the first processing module 31 is further configured to: obtain the first delay or the first access network delay; and perform the first operation based on the first delay or the first access network delay.

In this embodiment of this application, how to determine a delay of a data packet set and an error or success of the data packet set can be determined, and processing on a remaining data packet in a data packet set in a case that a delay budget of the data packet set has expired is determined, so that quality of service per data packet set can be better ensured.

The data processing apparatus 30 provided in this embodiment of this application is capable of implementing the processes implemented in the method embodiment of FIG. 3, with the same technical effect achieved. To avoid repetition, details are not described herein again.

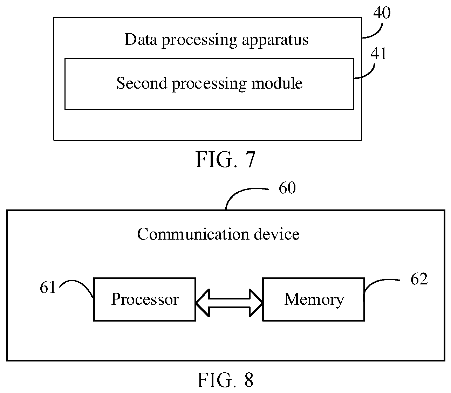

FIG. 7 is a diagram of a structure of a data processing apparatus according to an embodiment of this application. The apparatus is applied to a first communication system. As shown in FIG. 7, the data processing apparatus 40 includes:
a second processing module 42, configured to perform a second operation, where
the second operation includes at least one of the following:
   guaranteeing a first delay budget (for example, a PSDB) of a target data packet set;
   guaranteeing a first access network delay budget (for example, an AN PSDB) of a target data packet set;
   determining a first delay and/or a first access network delay of a target data packet set;
   determining a second delay and/or a second access network delay of a target data packet set;
   determining that a target data packet set is an error or a lost data packet set, or determining that a target data packet set is a successfully transmitted data packet set;
   determining that a target data packet set is a first-type error or lost data packet set, or determining that a target data packet set is a second-type error or lost data packet set;
   determining that a data packet in a target data packet set is an error or a lost data packet, or determining that a data packet in a target data packet set is a successfully transmitted data packet;
   discarding or skipping discarding a remaining data packet in a target data packet set in a case that a first delay budget or a first access network delay budget of the target data packet set has expired;
   discarding or skipping discarding a second data packet; or
   skipping applying quality of service QoS, a delay, a timer, and/or an operation at a data packet set granularity to a second data packet,
   where
   the first delay is duration from a moment at which a first end receives the 1^{st} data packet in the target data packet set to a moment at which the last target data packet in the target data packet set is successfully transmitted to a second end;
   the second delay is duration from a moment at which a first end receives the 1^{st} data packet in the target data packet set to a moment at which the last data packet in the target data packet set is successfully transmitted to a second end;
   the first access network delay is duration from a moment at which a third end receives the 1^{st} data packet in the target data packet set to a moment at which the last target data packet in the target data packet set is successfully transmitted to a fourth end;
   the second access network delay is duration from a moment at which a third end receives the 1^{st} data packet in the target data packet set to a moment at which the last data packet in the target data packet set is successfully transmitted to a fourth end;
   the first delay budget is a delay budget of the target data packet set; and
   the first access network delay budget is an access network delay budget of the target data packet set.

In some embodiments,
the delay budget of the target data packet set is an upper limit of the duration from the moment at which the first end receives the 1^{st} data packet in the target data packet set to the moment at which the last data packet (for example, the last target data packet) in the target data packet set is successfully transmitted to the second end; and
the access network delay budget of the target data packet set is an upper limit of the duration from the moment at which the third end receives the 1^{st} data packet in the target data packet set to the moment at which the last data packet (for example, the last target data packet) in the target data packet set is successfully transmitted to the fourth end.

In some embodiments,
the first end includes one of the following: a terminal or a Uu interface; and the second end includes one of the following: an anchor gateway or an N6 interface;
   or
the first end includes one of the following: an anchor gateway or an N6 interface; and the second end includes one of the following: a terminal or a Uu interface;
   or
the first end includes one of the following: a terminal or a Uu interface; and the second end includes one of the following: a RAN or an N3 interface;
   or
the first end includes one of the following: a RAN or an N3 interface; and the second end includes one of the following: a terminal or a Uu interface.

In some embodiments,
the third end includes one of the following: a terminal or a Uu interface; and the fourth end includes one of the following: a RAN or an N3 interface;
   or
the third end includes one of the following: a RAN or an N3 interface; and the fourth end includes one of the following: a terminal or a Uu interface.

In some embodiments,
the target data packet is a data packet that is in the target data packet set and that meets a first condition, where
the first condition includes at least one of the following:
   the data packet is received before the first delay budget expires or before the first access network delay budget expires; or
   a first time interval meets one of the following: a difference obtained by subtracting the first time interval from the first delay budget is greater than or equal to a CN PDB; a difference obtained by subtracting the first time interval from the first delay budget is greater than or equal to a core network delay of the data packet; a difference obtained by subtracting the first time interval from the first delay budget is greater than or equal to a PDB; a difference obtained by subtracting the first time interval from the first delay budget is greater than or equal to zero; a difference obtained by subtracting the first time interval from the first access network delay budget is greater than or equal to zero; a difference obtained by subtracting the first time interval from the first access network delay budget is greater than or equal to an AN PDB; or the first time interval is less than or equal to one of the following: the first delay budget, the first access network delay budget, first duration, a difference obtained by subtracting a CN PDB from the first delay budget, a difference obtained by subtracting a PDB from the first delay budget, a difference obtained by subtracting an AN PDB from the first access network delay budget, or a difference obtained by subtracting a core network delay of the data packet from the first delay budget, where
   the first time interval is a time interval between receiving time of the target data packet and receiving time of the 1^{st} arriving data packet in the target data packet set.

In some embodiments,
the second data packet is a data packet that is in the target data packet set and that meets a second condition, where
the second condition includes at least one of the following:
   a first time interval is greater than or equal to one of the following: the first delay budget, the first access network delay budget, or first duration; or
   the data packet is received after the first delay budget expires or after the first access network delay budget expires, where
   the first time interval is a time interval between arrival time of the target data packet and arrival time of the 1^{st} arriving data packet in the target data packet set; and
   the first duration meets one of the following:
      a difference obtained by subtracting the first duration from the first delay budget is greater than or equal to a CN PDB;
      a difference obtained by subtracting the first duration from the first delay budget is greater than or equal to a core network delay of the data packet;
      a difference obtained by subtracting the first duration from the first delay budget is greater than or equal to a PDB;
      a difference obtained by subtracting the first duration from the first delay budget is greater than or equal to zero;
      a difference obtained by subtracting the first duration from the first access network delay budget is greater than or equal to zero;
      a difference obtained by subtracting the first duration from the first access network delay budget is greater than or equal to an AN PDB;
      the first duration is less than or equal to the first delay budget;
      the first duration is less than or equal to a difference obtained by subtracting a CN PDB from the first delay budget;
      the first duration is less than or equal to a difference obtained by subtracting a core network delay of the data packet from the first delay budget;
      the first duration is less than or equal to a difference obtained by subtracting a PDB from the first delay budget;
      the first duration is less than or equal to the first access network delay budget; or
      the first duration is less than or equal to a difference obtained by subtracting an AN PDB from the first access network delay budget.

In some embodiments, the second processing module 41 is configured to: in a case that a fifth condition is met, determine that the target data packet set is an error or a lost data packet set, or determine that the target data packet set is a first-type error or a lost data packet set, where
the fifth condition includes at least one of the following:
the first delay of the target data packet set is greater than or equal to the first delay budget;
the first access network delay of the target data packet set is greater than or equal to the first access network delay budget;
in a case that the first delay budget or the first access network delay budget has expired, the target data packet set still includes a remaining data packet;
in a case that the first delay budget or the first access network delay budget has expired, a quantity or size of successfully transmitted data packets in the target data packet set is less than or equal to X% of a total data amount of the target data packet set, or a quantity or size of remaining data packets in the target data packet set is greater than or equal to (1-X%) of a total data amount of the target data packet set;
all or some of data packets in the target data packet set are discarded; or
all or some of target data packets in the target data packet set are discarded, where
the remaining data packet is one of the following: a target data packet that is in the target data packet set and that is still cached, has not been transmitted, and/or has not been successfully transmitted, or a data packet that is in the target data packet set and that is still cached, has not been transmitted, or has not been successfully transmitted.

In some embodiments, the second processing module 41 is configured to: in a case that a sixth condition is met, determine that the target data packet set is a second-type error or a lost data packet set, determine that the target data packet set is a successful data packet set, or determine that the target data packet set is not an error or a lost data packet set, where
the sixth condition includes at least one of the following:
the first delay of the target data packet set is less than or equal to the first delay budget;
the second delay of the target data packet set is greater than or equal to the first delay budget;
the first access network delay of the target data packet set is less than or equal to the first access network delay budget; or
the second access network delay of the target data packet set is greater than or equal to the first access network delay budget.

Optionally, the second-type error is not used for calculating a data packet set error rate.

In some embodiments, the second condition, the fifth condition, or the sixth condition further includes:
a quality of service QoS rate does not exceed a guaranteed flow bit rate GFBR.

Optionally, the second processing module 41 is configured to: in a case that a ninth condition is met, determine that the target data packet set is a successful data packet set, or determine that the target data packet set is not an error or a lost data packet set, where
the ninth condition includes at least one of the following:
in a case that the first delay budget or the first access network delay budget has not expired, all of data packets in the target data packet set are successfully transmitted;
in a case that the first delay budget or the first access network delay budget has not expired, a quantity or quantity of successfully transmitted data packets in the target data packet set is greater than or equal to X% of a total data amount of the target data packet set;
no data packet in the target data packet set is discarded; or
no target data packet in the target data packet set is discarded.

In a case that the ninth condition includes that "in a case that the first delay budget or the first access network delay budget has not expired, a quantity or size of successfully transmitted data packets in the target data packet set is greater than or equal to X% of a total data amount of the target data packet set", the ninth condition further includes: the target data packet set has a second requirement, where the second requirement is used for indicating that at least X% of the total data amount of the target data packet set is needed (for example, by an application layer) for using the target data packet set.

In a case that the ninth condition includes that "no data packet in the target data packet set is discarded" or "no target data packet in the target data packet set is discarded", the ninth condition further includes: the target data packet set has a first requirement, where the first requirement is used for indicating that all data packets are needed (for example, by an application layer) for using the target data packet set.

In some embodiments, the discarding or skipping discarding a remaining data packet in a target data packet set in a case that a first delay budget or a first access network delay budget of the target data packet set has expired includes one of the following:
in a case that a seventh condition is met, continuing to transmit or skipping discarding a remaining data packet in the target data packet set; or
in a case that an eighth condition is met, discarding a remaining data packet in the target data packet set,
where
the seventh condition includes at least one of the following:
   the target data packet set has a first requirement, where the first requirement is used for indicating that all data packets are needed (for example, by an application layer) for using the target data packet set; or
   the target data packet set has a second requirement, and a quantity or size of successfully transmitted data packets in the target data packet set has not reached X% of a total data amount of the target data packet set, where the second requirement is used for indicating that at least X% of the total data amount of the target data packet set is needed (for example, by an application layer) for using the target data packet set;
      and
   the eighth condition includes at least one of the following:
      the target data packet set is delay-sensitive; or
      the target data packet set has a second requirement, and a quantity or size of successfully transmitted data packets in the target data packet set is greater than or equal to X% of a total data amount of the target data packet set, where the second requirement is used for indicating that at least X% of the total data amount of the target data packet set is needed (for example, by an application layer) for using the target data packet set; and
      X% represents a percentage value, and may be an integer (for example, 80%) or a non-integer (for example, 80.99%).

In some embodiments, the discarding or skipping discarding a second data packet includes one of the following:
in a case that a third condition is met, continuing to wait for transmission or skipping discarding the second data packet; or
in a case that a fourth condition is met, discarding the second data packet,
where
the third condition includes at least one of the following:
   the first delay budget or the first access network delay budget of the target data packet set has expired;
   the target data packet set has a first requirement, where the first requirement is used for indicating that all data packets are needed (for example, by an application layer) for using the target data packet set; or
   the target data packet set has a second requirement, and a quantity or size of successfully transmitted data packets in the target data packet set has not reached X% of a total data amount of the target data packet set, where the second requirement is used for indicating that X% of the total data amount of the target data packet set is needed (for example, by an application layer) for using the target data packet set; and
   the fourth condition includes at least one of the following:
      the first delay budget or the first access network delay budget of the target data packet set has expired;
      the target data packet set is delay-sensitive; or
      the target data packet set has a second requirement, and a quantity or size of successfully transmitted data packets in the target data packet set is greater than or equal to X% of a total data amount of the target data packet set, where the second requirement is used for indicating that X% of the total data amount of the target data packet set is needed (for example, by an application layer) for using the target data packet set; and
      X% represents a percentage value, and may be an integer (for example, 80%) or a non-integer (for example, 80.99%).

In some embodiments, the third condition further includes: the target data packet set is delay-sensitive.

In some embodiments, the second processing module 41 is further configured to: obtain the first delay or the first access network delay; and perform the second operation based on the first delay or the first access network delay.

In this embodiment of this application, how to determine a delay of a data packet set and an error of the data packet set can be determined, and processing on a remaining data packet in a data packet set in a case that a delay budget of the data packet set has expired is determined, so that quality of service per data packet set can be better ensured.

The data processing apparatus 40 provided in this embodiment of this application is capable of implementing the processes implemented in the method embodiment of FIG. 4, with the same technical effect achieved. To avoid repetition, details are not described herein again.

Optionally, as shown in FIG. 8, an embodiment of this application further provides a communication device 60, including a processor 61 and a memory 62. The memory 62 stores a program or instructions capable of running on the processor 61. For example, in a case that the communication device 60 is a terminal, when the program or instructions are executed by the processor 61, the steps in the data processing method embodiments are implemented, with the same technical effect achieved. In a case that the communication device 60 is a network-side device, when the program or instructions are executed by the processor 61, the steps in the data processing method embodiments are implemented, with the same technical effect achieved. To avoid repetition, details are not described herein again.

An embodiment of this application further provides a readable storage medium. The readable storage medium stores a program or instructions. When the program or instructions are executed by a processor, the processes in the data processing method embodiments are implemented, with the same technical effect achieved. To avoid repetition, details are not described herein again.

The processor is a processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or a compact disc.

An embodiment of this application further provides a chip. The chip includes a processor and a communication interface. The communication interface is coupled to the processor. The processor is configured to run a program or instructions to implement the processes in the data processing method embodiments, with the same technical effect achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the data processing method embodiments, with the same technical effect achieved. To avoid repetition, details are not described herein again.

It should be noted that the terms "include", "comprise", or any of their variants in this specification are intended to cover a non-exclusive inclusion, so that a process, a method, an object, or an apparatus that includes a list of elements not only includes those elements but also includes other elements that are not expressly listed, or further includes elements inherent to such a process, method, object, or apparatus. In absence of more constraints, an element preceded by "includes a..." does not preclude the existence of other identical elements in the process, method, article, or apparatus that includes the element. In addition, it should be noted that the scope of the methods and apparatuses in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the related art may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, persons of ordinary skill in the art may further make many modifications without departing from the purposes of this application and the protection scope of the claims, and all the modifications shall fall within the protection scope of this application.

## Claims

1. A data processing method, comprising:
performing, by a first communication device, a first operation, wherein
the first operation comprises at least one of the following:
guaranteeing a first delay budget of a target data packet set;
guaranteeing a first access network delay budget of a target data packet set;
determining a first delay and/or a first access network delay of a target data packet set;
determining a second delay and/or a second access network delay of a target data packet set;
determining that a target data packet set is an error or a lost data packet set, or determining that a target data packet set is a successfully transmitted data packet set;
determining that a target data packet set is a first-type error or lost data packet set, or determining that a target data packet set is a second-type error or lost data packet set;
determining that a data packet in a target data packet set is an error or a lost data packet, or determining that a data packet in a target data packet set is a successfully transmitted data packet;
discarding or skipping discarding a remaining data packet in a target data packet set in a case that a first delay budget or a first access network delay budget of the target data packet set has expired;
discarding or skipping discarding a second data packet; or
skipping applying quality of service QoS, a delay, a timer, and/or an operation at a data packet set granularity to a second data packet,
wherein
the first delay is duration from a moment at which a first end receives the 1^{st} data packet in the target data packet set to a moment at which the last target data packet in the target data packet set is successfully transmitted to a second end;
the second delay is duration from a moment at which a first end receives the 1^{st} data packet in the target data packet set to a moment at which the last data packet in the target data packet set is successfully transmitted to a second end;
the first access network delay is duration from a moment at which a third end receives the 1^{st} data packet in the target data packet set to a moment at which the last target data packet in the target data packet set is successfully transmitted to a fourth end;
the second access network delay is duration from a moment at which a third end receives the 1^{st} data packet in the target data packet set to a moment at which the last data packet in the target data packet set is successfully transmitted to a fourth end;
the first delay budget is a delay budget of the target data packet set; and
the first access network delay budget is an access network delay budget of the target data packet set.

2. The method according to claim 1, wherein
the delay budget of the target data packet set is an upper limit of the duration from the moment at which the first end receives the 1^{st} data packet in the target data packet set to the moment at which the last data packet in the target data packet set is successfully transmitted to the second end; and
the access network delay budget of the target data packet set is an upper limit of the duration from the moment at which the third end receives the 1^{st} data packet in the target data packet set to the moment at which the last data packet in the target data packet set is successfully transmitted to the fourth end.

3. The method according to claim 1 or 2, wherein
the first end comprises one of the following: a terminal or a Uu interface; and the second end comprises one of the following: an anchor gateway or an N6 interface;
or
the first end comprises one of the following: an anchor gateway or an N6 interface; and the second end comprises one of the following: a terminal or a Uu interface;
or
the first end comprises one of the following: a terminal or a Uu interface; and the second end comprises one of the following: a RAN or an N3 interface;
or
the first end comprises one of the following: a RAN or an N3 interface; and the second end comprises one of the following: a terminal or a Uu interface.

4. The method according to claim 1 or 2, wherein
the third end comprises one of the following: a terminal or a Uu interface; and the fourth end comprises one of the following: a RAN or an N3 interface;
or
the third end comprises one of the following: a RAN or an N3 interface; and the fourth end comprises one of the following: a terminal or a Uu interface.

5. The method according to claim 1, wherein
the target data packet is a data packet that is in the target data packet set and that meets a first condition, wherein
the first condition comprises at least one of the following:
the data packet is received before the first delay budget expires or before the first access network delay budget expires; or
a first time interval meets one of the following: a difference obtained by subtracting the first time interval from the first delay budget is greater than or equal to a CN PDB; a difference obtained by subtracting the first time interval from the first delay budget is greater than or equal to a core network delay of the data packet; a difference obtained by subtracting the first time interval from the first delay budget is greater than or equal to a PDB; a difference obtained by subtracting the first time interval from the first delay budget is greater than or equal to zero; a difference obtained by subtracting the first time interval from the first access network delay budget is greater than or equal to zero; a difference obtained by subtracting the first time interval from the first access network delay budget is greater than or equal to an AN PDB; or the first time interval is less than or equal to one of the following: the first delay budget, the first access network delay budget, first duration, a difference obtained by subtracting a CN PDB from the first delay budget, a difference obtained by subtracting a PDB from the first delay budget, a difference obtained by subtracting an AN PDB from the first access network delay budget, or a difference obtained by subtracting a core network delay of the data packet from the first delay budget,
wherein
the first time interval is a time interval between receiving time of the target data packet and receiving time of the 1^{st} arriving data packet in the target data packet set.

6. The method according to claim 1, wherein the second data packet is a data packet that is in the target data packet set and that meets a second condition, wherein
the second condition comprises at least one of the following:
a first time interval is greater than or equal to one of the following: the first delay budget, the first access network delay budget, or first duration; or
the data packet is received after the first delay budget expires or after the first access network delay budget expires,
wherein
the first time interval is a time interval between arrival time of the target data packet and arrival time of the 1^{st} arriving data packet in the target data packet set.

7. The method according to claim 1, wherein the first duration meets one of the following:
a difference obtained by subtracting the first duration from the first delay budget is greater than or equal to a CN PDB;
a difference obtained by subtracting the first duration from the first delay budget is greater than or equal to a core network delay of the data packet;
a difference obtained by subtracting the first duration from the first delay budget is greater than or equal to a PDB;
a difference obtained by subtracting the first duration from the first delay budget is greater than or equal to zero;
a difference obtained by subtracting the first duration from the first access network delay budget is greater than or equal to zero;
a difference obtained by subtracting the first duration from the first access network delay budget is greater than or equal to an AN PDB;
the first duration is less than or equal to the first delay budget;
the first duration is less than or equal to a difference obtained by subtracting a CN PDB from the first delay budget;
the first duration is less than or equal to a difference obtained by subtracting a core network delay of the data packet from the first delay budget;
the first duration is less than or equal to a difference obtained by subtracting a PDB from the first delay budget;
the first duration is less than or equal to the first access network delay budget; or
the first duration is less than or equal to a difference obtained by subtracting an AN PDB from the first access network delay budget.

8. The method according to claim 1, wherein in a case that a fifth condition is met, it is determined that the target data packet set is an error or a lost data packet set, or it is determined that the target data packet set is a first-type error or lost data packet set, wherein
the fifth condition comprises at least one of the following:
the first delay of the target data packet set is greater than or equal to the first delay budget;
the first access network delay of the target data packet set is greater than or equal to the first access network delay budget;
in a case that the first delay budget or the first access network delay budget has expired, the target data packet set still comprises a remaining data packet;
in a case that the first delay budget or the first access network delay budget has expired, a quantity or size of successfully transmitted data packets in the target data packet set is less than or equal to X% of a total data amount of the target data packet set, or a quantity or size of remaining data packets in the target data packet set is greater than or equal to (1-X%) of a total data amount of the target data packet set;
all or some of data packets in the target data packet set are discarded; or
all or some of target data packets in the target data packet set are discarded, wherein
the remaining data packet is one of the following: a target data packet that is in the target data packet set and that is still cached, has not been transmitted, and/or has not been successfully transmitted, or a data packet that is in the target data packet set and that is still cached, has not been transmitted, or has not been successfully transmitted.

9. The method according to claim 1, wherein in a case that a sixth condition is met, it is determined that the target data packet set is a second-type error or lost data packet set, it is determined that the target data packet set is a successful data packet set, or it is determined that the target data packet set is not an error or a lost data packet set, wherein
the sixth condition comprises at least one of the following:
the first delay of the target data packet set is less than or equal to the first delay budget;
the second delay of the target data packet set is greater than or equal to the first delay budget;
the first access network delay of the target data packet set is less than or equal to the first access network delay budget; or
the second access network delay of the target data packet set is greater than or equal to the first access network delay budget.

10. The method according to claim 1 or 9, wherein the second-type error is not used for calculating a data packet set error rate.

11. The method according to claim 6, wherein the second condition, the fifth condition, or the sixth condition further comprises:
a quality of service QoS rate does not exceed a guaranteed flow bit rate GFBR.

12. The method according to claim 1, wherein in a case that a ninth condition is met, it is determined that the target data packet set is a successful data packet set, or it is determined that the target data packet set is not an error or a lost data packet set, wherein
the ninth condition comprises at least one of the following:
in a case that the first delay budget or the first access network delay budget has not expired, all of data packets in the target data packet set are successfully transmitted;
in a case that the first delay budget or the first access network delay budget has not expired, a quantity or size of successfully transmitted data packets in the target data packet set is greater than or equal to X% of a total data amount of the target data packet set;
no data packet in the target data packet set is discarded; or
no target data packet in the target data packet set is discarded.

13. The method according to claim 1, wherein the discarding or skipping discarding a remaining data packet in a target data packet set in a case that a first delay budget or a first access network delay budget of the target data packet set has expired comprises one of the following:
in a case that a seventh condition is met, continuing to transmit or skipping discarding a remaining data packet in the target data packet set; or
in a case that an eighth condition is met, discarding a remaining data packet in the target data packet set,
wherein
the seventh condition comprises at least one of the following:
the target data packet set has a first requirement, wherein the first requirement is used for indicating that an application layer needs all data packets for using the target data packet set; or
the target data packet set has a second requirement, and a quantity or size of successfully transmitted data packets in the target data packet set has not reached X% of a total data amount of the target data packet set, wherein the second requirement is used for indicating that at least X% of the total data amount of the target data packet set is needed for using the target data packet set;
and
the eighth condition comprises at least one of the following:
the target data packet set is delay-sensitive; or
the target data packet set has a second requirement, and a quantity or size of successfully transmitted data packets in the target data packet set is greater than or equal to X% of a total data amount of the target data packet set, wherein the second requirement is used for indicating that at least X% of the total data amount of the target data packet set is needed for using the target data packet set.

14. The method according to claim 1, wherein the discarding or skipping discarding a second data packet comprises one of the following:
in a case that a third condition is met, continuing to wait for transmission or skipping discarding the second data packet; or
in a case that a fourth condition is met, discarding the second data packet,
wherein
the third condition comprises at least one of the following:
the first delay budget or the first access network delay budget of the target data packet set has expired;
the target data packet set has a first requirement, wherein the first requirement is used for indicating that all data packets are needed for using the target data packet set; or
the target data packet set has a second requirement, and a quantity or size of successfully transmitted data packets in the target data packet set has not reached X% of a total data amount of the target data packet set, wherein the second requirement is used for indicating that at least X% of the total data amount of the target data packet set is needed for using the target data packet set;
and
the fourth condition comprises at least one of the following:
the first delay budget or the first access network delay budget of the target data packet set has expired;
the target data packet set is delay-sensitive; or
the target data packet set has a second requirement, and a quantity or size of successfully transmitted data packets in the target data packet set is greater than or equal to X% of a total data amount of the target data packet set, wherein the second requirement is used for indicating that at least X% of the total data amount of the target data packet set is needed for using the target data packet set.

15. The method according to claim 14, wherein the third condition further comprises:
the target data packet set is delay-sensitive.

16. The method according to claim 1, wherein the method further comprises: obtaining the first delay or the first access network delay; and
performing, by the first communication device, the first operation based on the first delay or the first access network delay.

17. A data processing method, comprising:
performing, by a first communication system, a second operation, wherein
the second operation comprises at least one of the following:
guaranteeing a first delay budget of a target data packet set;
guaranteeing a first access network delay budget of a target data packet set;
determining a first delay and/or a first access network delay of a target data packet set;
determining a second delay and/or a second access network delay of a target data packet set;
determining that a target data packet set is an error or a lost data packet set, or determining that a target data packet set is a successfully transmitted data packet set;
determining that a target data packet set is a first-type error or lost data packet set, or determining that a target data packet set is a second-type error or lost data packet set;
determining that a data packet in a target data packet set is an error or a lost data packet, or determining that a data packet in a target data packet set is a successfully transmitted data packet;
discarding or skipping discarding a remaining data packet in a target data packet set in a case that a first delay budget or a first access network delay budget of the target data packet set has expired;
discarding or skipping discarding a second data packet; or
skipping applying quality of service QoS, a delay, a timer, and/or an operation at a data packet set granularity to a second data packet,
wherein
the first delay is duration from a moment at which a first end receives the 1^{st} data packet in the target data packet set to a moment at which the last target data packet in the target data packet set is successfully transmitted to a second end;
the second delay is duration from a moment at which a first end receives the 1^{st} data packet in the target data packet set to a moment at which the last data packet in the target data packet set is successfully transmitted to a second end;
the first access network delay is duration from a moment at which a third end receives the 1^{st} data packet in the target data packet set to a moment at which the last target data packet in the target data packet set is successfully transmitted to a fourth end;
the second access network delay is duration from a moment at which a third end receives the 1^{st} data packet in the target data packet set to a moment at which the last data packet in the target data packet set is successfully transmitted to a fourth end;
the first delay budget is a delay budget of the target data packet set; and
the first access network delay budget is an access network delay budget of the target data packet set.

18. The method according to claim 17, wherein
the delay budget of the target data packet set is an upper limit of the duration from the moment at which the first end receives the 1^{st} data packet in the target data packet set to the moment at which the last data packet in the target data packet set is successfully transmitted to the second end; and
the access network delay budget of the target data packet set is an upper limit of the duration from the moment at which the third end receives the 1^{st} data packet in the target data packet set to the moment at which the last data packet in the target data packet set is successfully transmitted to the fourth end.

19. The method according to claim 17 or 18, wherein
the first end comprises one of the following: a terminal or a Uu interface; and the second end comprises one of the following: an anchor gateway or an N6 interface;
or
the first end comprises one of the following: an anchor gateway or an N6 interface; and the second end comprises one of the following: a terminal or a Uu interface;
or
the first end comprises one of the following: a terminal or a Uu interface; and the second end comprises one of the following: a RAN or an N3 interface;
or
the first end comprises one of the following: a RAN or an N3 interface; and the second end comprises one of the following: a terminal or a Uu interface.

20. The method according to claim 17 or 18, wherein
the third end comprises one of the following: a terminal or a Uu interface; and the fourth end comprises one of the following: a RAN or an N3 interface;
or
the third end comprises one of the following: a RAN or an N3 interface; and the fourth end comprises one of the following: a terminal or a Uu interface.

21. The method according to claim 17, wherein
the target data packet is a data packet that is in the target data packet set and that meets a first condition, wherein
the first condition comprises at least one of the following:
the data packet is received before the first delay budget expires or before the first access network delay budget expires; or
a first time interval meets one of the following: a difference obtained by subtracting the first time interval from the first delay budget is greater than or equal to a CN PDB; a difference obtained by subtracting the first time interval from the first delay budget is greater than or equal to a core network delay of the data packet; a difference obtained by subtracting the first time interval from the first delay budget is greater than or equal to a PDB; a difference obtained by subtracting the first time interval from the first delay budget is greater than or equal to zero; a difference obtained by subtracting the first time interval from the first access network delay budget is greater than or equal to zero; a difference obtained by subtracting the first time interval from the first access network delay budget is greater than or equal to an AN PDB; or the first time interval is less than or equal to one of the following: the first delay budget, the first access network delay budget, first duration, a difference obtained by subtracting a CN PDB from the first delay budget, a difference obtained by subtracting a PDB from the first delay budget, a difference obtained by subtracting an AN PDB from the first access network delay budget, or a difference obtained by subtracting a core network delay of the data packet from the first delay budget,
wherein
the first time interval is a time interval between receiving time of the target data packet and receiving time of the 1^{st} arriving data packet in the target data packet set.

22. The method according to claim 17, wherein the second data packet is a data packet that is in the target data packet set and that meets a second condition, wherein
the second condition comprises at least one of the following:
a first time interval is greater than or equal to one of the following: the first delay budget, the first access network delay budget, or first duration; or
the data packet is received after the first delay budget expires or after the first access network delay budget expires,
wherein
the first time interval is a time interval between arrival time of the target data packet and arrival time of the 1^{st} arriving data packet in the target data packet set.

23. The method according to claim 21 or 22, wherein the first duration meets one of the following:
a difference obtained by subtracting the first duration from the first delay budget is greater than or equal to a CN PDB;
a difference obtained by subtracting the first duration from the first delay budget is greater than or equal to a core network delay of the data packet;
a difference obtained by subtracting the first duration from the first delay budget is greater than or equal to a PDB;
a difference obtained by subtracting the first duration from the first delay budget is greater than or equal to zero;
a difference obtained by subtracting the first duration from the first access network delay budget is greater than or equal to zero;
a difference obtained by subtracting the first duration from the first access network delay budget is greater than or equal to an AN PDB;
the first duration is less than or equal to the first delay budget;
the first duration is less than or equal to a difference obtained by subtracting a CN PDB from the first delay budget;
the first duration is less than or equal to a difference obtained by subtracting a core network delay of the data packet from the first delay budget;
the first duration is less than or equal to a difference obtained by subtracting a PDB from the first delay budget;
the first duration is less than or equal to the first access network delay budget; or
the first duration is less than or equal to a difference obtained by subtracting an AN PDB from the first access network delay budget.

24. The method according to claim 17, wherein in a case that a fifth condition is met, it is determined that the target data packet set is an error or a lost data packet set, or it is determined that the target data packet set is a first-type error or lost data packet set, wherein
the fifth condition comprises at least one of the following:
the first delay of the target data packet set is greater than or equal to the first delay budget;
the first access network delay of the target data packet set is greater than or equal to the first access network delay budget;
in a case that the first delay budget or the first access network delay budget has expired, the target data packet set still comprises a remaining data packet;
in a case that the first delay budget or the first access network delay budget has expired, a quantity or size of successfully transmitted data packets in the target data packet set is less than or equal to X% of a total data amount of the target data packet set, or a quantity or size of remaining data packets in the target data packet set is greater than or equal to (1-X%) of a total data amount of the target data packet set;
all or some of data packets in the target data packet set are discarded; or
all or some of target data packets in the target data packet set are discarded, wherein
the remaining data packet is one of the following: a target data packet that is in the target data packet set and that is still cached, has not been transmitted, and/or has not been successfully transmitted, or a data packet that is in the target data packet set and that is still cached, has not been transmitted, or has not been successfully transmitted.

25. The method according to claim 17, wherein in a case that a sixth condition is met, it is determined that the target data packet set is a second-type error or lost data packet set, it is determined that the target data packet set is a successful data packet set, or it is determined that the target data packet set is not an error or a lost data packet set, wherein
the sixth condition comprises at least one of the following:
the first delay of the target data packet set is less than or equal to the first delay budget;
the second delay of the target data packet set is greater than or equal to the first delay budget;
the first access network delay of the target data packet set is less than or equal to the first access network delay budget; or
the second access network delay of the target data packet set is greater than or equal to the first access network delay budget.

26. The method according to claim 17 or 25, wherein the second-type error is not used for calculating a data packet set error rate.

27. The method according to claim 22, wherein the second condition, the fifth condition, or the sixth condition further comprises:
a quality of service QoS rate does not exceed a guaranteed flow bit rate GFBR.

28. The method according to claim 17, wherein in a case that a ninth condition is met, it is determined that the target data packet set is a successful data packet set, or it is determined that the target data packet set is not an error or a lost data packet set, wherein
the ninth condition comprises at least one of the following:
in a case that the first delay budget or the first access network delay budget has not expired, all of data packets in the target data packet set are successfully transmitted;
in a case that the first delay budget or the first access network delay budget has not expired, a quantity or size of successfully transmitted data packets in the target data packet set is greater than or equal to X% of a total data amount of the target data packet set;
no data packet in the target data packet set is discarded; or
no target data packet in the target data packet set is discarded.

29. The method according to claim 17, wherein the discarding or skipping discarding a remaining data packet in a target data packet set in a case that a first delay budget or a first access network delay budget of the target data packet set has expired comprises one of the following:
in a case that a seventh condition is met, continuing to transmit or skipping discarding a remaining data packet in the target data packet set; or
in a case that an eighth condition is met, discarding a remaining data packet in the target data packet set,
wherein
the seventh condition comprises at least one of the following:
the target data packet set has a first requirement, wherein the first requirement is used for indicating that all data packets are needed for using the target data packet set; or
the target data packet set has a second requirement, and a quantity or size of successfully transmitted data packets in the target data packet set has not reached X% of a total data amount of the target data packet set, wherein the second requirement is used for indicating that at least X% of the total data amount of the target data packet set is needed for using the target data packet set;
and
the eighth condition comprises at least one of the following:
the target data packet set is delay-sensitive; or
the target data packet set has a second requirement, and a quantity or size of successfully transmitted data packets in the target data packet set is greater than or equal to X% of a total data amount of the target data packet set, wherein the second requirement is used for indicating that at least X% of the total data amount of the target data packet set is needed for using the target data packet set.

30. The method according to claim 17, wherein the discarding or skipping discarding a second data packet comprises one of the following:
in a case that a third condition is met, continuing to wait for transmission or skipping discarding the second data packet; or
in a case that a fourth condition is met, discarding the second data packet,
wherein
the third condition comprises at least one of the following:
the first delay budget or the first access network delay budget of the target data packet set has expired;
the target data packet set has a first requirement, wherein the first requirement is used for indicating that all data packets are needed for using the target data packet set; or
the target data packet set has a second requirement, and a quantity or size of successfully transmitted data packets in the target data packet set has not reached X% of a total data amount of the target data packet set, wherein the second requirement is used for indicating that at least X% of the total data amount of the target data packet set is needed for using the target data packet set;
and
the fourth condition comprises at least one of the following:
the first delay budget or the first access network delay budget of the target data packet set has expired;
the target data packet set is delay-sensitive; or
the target data packet set has a second requirement, and a quantity of successfully transmitted data packets in the target data packet set is greater than or equal to X% of a total data amount of the target data packet set, wherein the second requirement is used for indicating that at least X% of the total data amount of the target data packet set is needed for using the target data packet set.

31. The method according to claim 30, wherein the third condition further comprises: the target data packet set is delay-sensitive.

32. The method according to claim 17, wherein the method further comprises: obtaining the first delay or the first access network delay; and
performing, by the first communication system, a first operation based on the first delay or the first access network delay.

33. A data processing apparatus, comprising:
a first processing module, configured to perform a first operation, wherein
the first operation comprises at least one of the following:
guaranteeing a first delay budget of a target data packet set;
guaranteeing a first access network delay budget of a target data packet set;
determining a first delay and/or a first access network delay of a target data packet set;
determining a second delay and/or a second access network delay of a target data packet set;
determining that a target data packet set is an error or a lost data packet set, or determining that a target data packet set is a successfully transmitted data packet set;
determining that a target data packet set is a first-type error or lost data packet set, or determining that a target data packet set is a second-type error or lost data packet set;
determining that a data packet in a target data packet set is an error or a lost data packet, or determining that a data packet in a target data packet set is a successfully transmitted data packet;
discarding or skipping discarding a remaining data packet in a target data packet set in a case that a first delay budget or a first access network delay budget of the target data packet set has expired;
discarding or skipping discarding a second data packet; or
skipping applying quality of service QoS, a delay, a timer, and/or an operation at a data packet set granularity to a second data packet,
wherein
the first delay is duration from a moment at which a first end receives the 1^{st} data packet in the target data packet set to a moment at which the last target data packet in the target data packet set is successfully transmitted to a second end;
the second delay is duration from a moment at which a first end receives the 1^{st} data packet in the target data packet set to a moment at which the last data packet in the target data packet set is successfully transmitted to a second end;
the first access network delay is duration from a moment at which a third end receives the 1^{st} data packet in the target data packet set to a moment at which the last target data packet in the target data packet set is successfully transmitted to a fourth end;
the second access network delay is duration from a moment at which a third end receives the 1^{st} data packet in the target data packet set to a moment at which the last data packet in the target data packet set is successfully transmitted to a fourth end;
the first delay budget is a delay budget of the target data packet set; and
the first access network delay budget is an access network delay budget of the target data packet set.

34. A data processing apparatus, comprising:
a second processing module, configured to perform a second operation, wherein
the second operation comprises at least one of the following:
guaranteeing a first delay budget of a target data packet set;
guaranteeing a first access network delay budget of a target data packet set;
determining a first delay and/or a first access network delay of a target data packet set;
determining a second delay and/or a second access network delay of a target data packet set;
determining that a target data packet set is an error or a lost data packet set, or determining that a target data packet set is a successfully transmitted data packet set;
determining that a target data packet set is a first-type error or lost data packet set, or determining that a target data packet set is a second-type error or lost data packet set;
determining that a data packet in a target data packet set is an error or a lost data packet, or determining that a data packet in a target data packet set is a successfully transmitted data packet;
discarding or skipping discarding a remaining data packet in a target data packet set in a case that a first delay budget or a first access network delay budget of the target data packet set has expired;
discarding or skipping discarding a second data packet; or
skipping applying quality of service QoS, a delay, a timer, and/or an operation at a data packet set granularity to a second data packet,
wherein
the first delay is duration from a moment at which a first end receives the 1st data packet in the target data packet set to a moment at which the last target data packet in the target data packet set is successfully transmitted to a second end;
the second delay is duration from a moment at which a first end receives the 1^{st} data packet in the target data packet set to a moment at which the last data packet in the target data packet set is successfully transmitted to a second end;
the first access network delay is duration from a moment at which a third end receives the 1^{st} data packet in the target data packet set to a moment at which the last target data packet in the target data packet set is successfully transmitted to a fourth end;
the second access network delay is duration from a moment at which a third end receives the 1^{st} data packet in the target data packet set to a moment at which the last data packet in the target data packet set is successfully transmitted to a fourth end;
the first delay budget is a delay budget of the target data packet set; and
the first access network delay budget is an access network delay budget of the target data packet set.

35. A communication device, comprising a processor and a memory, wherein the memory stores a program or instructions capable of running on the processor, and when the program or instructions are executed by the processor, the steps of the data processing method according to any one of claims 1 to 32 are implemented.

36. A readable storage medium, wherein the readable storage medium stores a program or instructions, and when the program or instructions are executed by a processor, the steps of the data processing method according to any one of claims 1 to 32 are implemented.
